(19)

Europäisches
Patentamt
European
Patent Office
Office européen
des brevets

(11) **EP 4 325 768 A1**

(12) **EUROPEAN PATENT APPLICATION**

(43) Date of publication:
**21.02.2024 Bulletin 2024/08**

(21) Application number: **22315185.3**

(22) Date of filing: **18.08.2022**

(51) International Patent Classification (IPC):
**H04L 9/00** $^{(2022.01)}$ **H04L 9/30** $^{(2006.01)}$

(52) Cooperative Patent Classification (CPC):
**H04L 9/008; H04L 9/3093**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Zama SAS**
**75008 Paris (FR)**

(72) Inventor: **Ligier, Damien**
**75012 Paris (FR)**

(74) Representative: **DeltaPatents B.V.**
**Fellenoord 370**
**5611 ZL Eindhoven (NL)**

(54) **KEY SETS WITH COMMON OR PREDEFINED DIGITS**

(57)    Some embodiments are directed to a cryptographic method (600) of performing an encrypted computation. A blind rotation can be applied to an input value encrypted under a blind rotation input key to obtain a rotation polynomial encrypted under a blind rotation output key of the key set. Further, a sample extraction can be applied to a polynomial encrypted under a sample extraction input key to obtain an encrypted coefficient of the polynomial, and/or a key switching can be applied to a value or polynomial encrypted under a key switching input key to obtain a key switching output encrypted under a key switching output key. The keys are defined such that at least some keys have digits in common, and/or at least some keys have more digits with predefined values.

Fig. 5E

**Description**

**TECHNICAL FIELD**

The presently disclosed subject matter relates to a cryptographic method of performing an encrypted computation, to a corresponding cryptographic device, and to a computer readable medium.

**BACKGROUND**

Homomorphic cryptography allows one to perform encrypted computations: computations, e.g., circuit evaluations, that are performed over encrypted data by a party without that party being able to decrypt. For example, input data and computation results may be received and returned in encrypted form. Intermediate data, e.g., an internal state of the computation, may also be in encrypted form.

Even though the result of the computation is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted.

For example, homomorphic cryptography may be applied in fields such as health care in which privacy regulations may make it difficult to share plain data, but computations on encrypted medical data may be allowable. For example, a medical model developed, say, to classify medical data may be configured to receive medical data from a third party, say a hospital, in encrypted form. The medical model might, e.g., classify medical data, e.g., as normal or abnormal, or as having some particular medical syndrome, disease, or other disorder. Using homomorphic encryption, the medical model may be applied to medical data that is received in encrypted form. This means that the party that offers the medical model does not have access to the plain medical data that corresponds to the encrypted medical data. The user of the service can decrypt the result of the medical model application.

In particular, homomorphic cryptography techniques exist that can be used, at least in principle, to compute any function on encrypted data. Such techniques are referred to as "fully homomorphic encryption" (FHE) techniques.

Known implementations of FHE use noisy ciphertexts for security reasons. For example, encryption of a data item may comprise mapping the data item to a point in a key-dependent lattice, to which noise is added. In particular, many known implementations of FHE use LWE-type ciphertexts, whose security depends on the cryptographic hardness of the Learning With Errors problem or one of its variants, such as Ring Learning With Errors (RLWE) or Generalized Learning With Errors (GLWE). Such an LWE-type ciphertext may be a LWE ciphertext comprising one or more mask values (e.g., values modulo a certain modulus $q$, or torus elements), plus a body value which is derived from the mask values and from a plaintext using an encryption key, and which contains the noise. A generalization of this is a GLWE ciphertext, that encrypts and uses polynomials instead of scalar values. A RLWE ciphertext is another type of GLWE ciphertext. Other known implementations of FHE use NTRU-type ciphertexts, for which the same considerations largely apply.

When a data item has just been encrypted the noise is low - the encryption is fresh. For example, the amount of noise is so low, that if a data item were to be decrypted, the noise can be removed at some point in the decryption process, e.g., by rounding. On the other hand, the noise should be high enough to make attacks on the system sufficiently hard. For example, in the hypothetical absence of noise, many homomorphic encryption schemes could be attacked with linear algebra, or other efficient algorithms, e.g., lattice reduction algorithms. When a data item is encrypted, noise is added that is chosen so that attacks are hard while homomorphic operations can still be performed and decryption is still possible.

Most homomorphic operations increase the noise that is inherent in a homomorphically encrypted data item. When many such operations are performed, the noise may reach a level such that unique decryption is no longer possible. Generally, it is known to use a technique called bootstrapping to reduce the noise of a homomorphically encrypted value. Bootstrapping may use a public key called a bootstrapping key. By using bootstrapping to reducing noise when needed, in principle it is possible to compute any desired number of homomorphic operations.

A particular class of fully homomorphic encryption schemes are the TFHE-like homomorphic encryption schemes. Such a scheme is described in I. Chillotti et al., "Programmable bootstrapping enables efficient homomorphic inference of deep neural networks", Cyber Security Cryptography and Machine Learning (CSCML 2021), vol. 12716 of Lecture Notes in Computer Science, pp. 1-19, Springer, 2021 (incorporated herein by reference). TFHE-like schemes differentiate themselves from other FHE schemes by supporting a comparatively very efficient technique for bootstrapping; in addition, they enable at the same time to evaluate a function during the bootstrap operation, referred to as programmable bootstrapping. The regular bootstrapping corresponds to a programmable bootstrapping with the identity function. Interestingly, the output of the programmable bootstrapping has an amount of noise that is independent of the noise in the input ciphertext. Thus, by performing the programmable bootstrapping, the noise in the input ciphertext can be reduced to a fixed amount, while possibly at the same time applying a function to the input ciphertext. By performing the programmable bootstrapping at appropriate times, it is possible to perform encrypted computations of unlimited multiplicative complexity.

Generally, an encrypted computation using a TFHE-like homomorphic encryption scheme, involves values and polynomials encrypted under a set of keys, e.g., a set of LWE and/or GLWE keys, or a set of NTRU keys. For example, a blind rotation may be used, which acts on an encrypted value and may output an encrypted polynomial. As another example, a key switching may be used, which converts between encryptions under different keys.

The keys that are used in the encrypted computation, are typically randomly generated according to a probability distribution. For example, the keys used for the input of a blind rotation, may be independently randomly generated, and similarly for keys of the inputs and outputs of a key switching.

The way in which the keys are randomly generated, depends on the type of secret key. Various types of secret key are known, e.g., their digits may be generated according to independent probability distributions (e.g., uniform binary or Gaussian), or according to an overall probability distribution (e.g., with a fixed overall Hamming weight). The type of secret key that is used, can influence various aspects of the encrypted computation, including the way encrypted operations are implemented; the resulting computational complexity and noise growth; and the security level.

## SUMMARY

Although existing TFHE-based encrypted computation techniques are capable of performing a wide variety of operations on encrypted values, there is still a need to improve their computational efficiency, storage requirements in terms of the key material used to carry out an encrypted computation, and/or flexibility in terms of values for cryptographic parameters that can be used. It is a goal of the invention to address at least some of these problems.

According to one aspect of the invention, a cryptographic method of performing an encrypted computation is provided, as defined by the claims. According to a further aspect, a device corresponding to the computer-implemented method is provided, as defined by the claims. According to another aspect, a computer-readable medium is provided as defined by the claims.

The encrypted computation may involve values and polynomials encrypted under one or more encryption keys. Encryption keys for encrypting values are also referred to herein as "value keys". Encryption keys for encrypting polynomials are also referred to herein as "polynomial keys". The keys may together form a key set. The keys of the key set may support a programmable bootstrapping operation, in other words, the encrypted computation may be in the "TFHE-like" setting. In particular, the keys may be defined according to lattice-based encryption, e.g., the value keys may be LWE keys and the polynomial keys may be GLWE keys.

The encrypted computation may involve various "key-related" operations, that convert between different types of encryption and/or encryptions under different keys. In particular, the encrypted computation may comprise a blind rotation operation, in which an input value encrypted under a blind rotation input key of the key set is converted into a rotation polynomial encrypted under a blind rotation output key of the key set. The blind rotation may evaluate a homomorphic decryption of the encrypted input value in the exponent of a polynomial. For example, the obtained rotation polynomial may represent an application of a lookup table to the input value. Such a blind rotation is often applied as a step in a programmable bootstrapping, see "Programmable bootstrapping enables efficient homomorphic inference of deep neural networks".

The encrypted computation may also comprise a sample extraction operation, in which a polynomial encrypted under a sample extraction input key of the key set may be converted into an encryption of a coefficient of the polynomial, and/or a key switching operation, in which a value or polynomial encrypted under a key switching input key of the key set may be converted to a key switching output encrypted under a key switching output key of the key set (e.g., different from the key switching input key).

When using existing techniques, the respective keys of the key set of an encrypted computation are typically independently randomly generated, with the digits of a secret key being defined e.g. as i.i.d. (independent and identically distributed) random variables or based on a joint probability distribution that allows multiple possible values of the digit. The term "digits" may refer in general to scalar values forming the secret key, e.g., values forming an LWE key or coefficients of polynomials forming a GLWE key.

Interestingly, the inventors realized that, by changing the way in which the keys of the key set are formed, it is possible to improve the efficiency of various key-related operations, to reduce storage requirements for the key material used in the encrypted computation, and to improve the flexibility of the encrypted computation in terms of cryptographic parameters. Namely, the inventors envisaged to use a key set in which the assumption that keys are independently randomly generated, is loosened; in particular, by using keys that have one or more digits in common, and/or by using keys that have one or more digits with predefined values.

By using such special types of keys in the key set of an encrypted computation, various operations can be implemented in a better way. In particular, by using keys that have digits in common and/or digits with predefined values, storage requirements for key material can be reduced. Namely, blind rotation and key switching operations typically use bootstrapping and key switching keys respectively, which comprise encryptions of values based on the input secret keys. By using secret keys that have digits in common, encryptions can be shared between different bootstrapping and key switching keys. By using secret keys that have digits with predefined values, the corresponding encryptions may be eliminated, leading to fewer encryptions being needed and thus smaller key material. Using predefined values and common digits also results in fewer encrypted operations, leading to computationally more efficient operations with less noise in the output.

In the same way, for sample extraction, having an input key with predefined values makes the operation more efficient, while using an input key for the sample extraction that has digits in common with other keys of the encrypted computation, can make a subsequent key switching less costly or can even allow to eliminate it completely.

The provided techniques may effectively provide the party performing the encrypted computation with some controlled knowledge about the secret keys that are used, allowing the encrypted computation to be performed in an improved way. This provides increased flexibility in terms of the cryptographic parameters that can be used. In particular, existing techniques in many cases rely on polynomial rings modulo polynomial of degree $N$, where $N$ is a power of two. This means that, when increasing $N$ to increase security, $N$ needs to be doubled, doubling the key size and computational cost of various operations. For example, an LWE-type sample extraction of an encrypted polynomial

$$\vec{S} = (S_1, \cdots, S_k) \in \left(\Re_q\right)^k$$

modulo $N$ may result in a LWE ciphertext $ct \in \left(\mathbb{Z}_q\right)^{k \cdot N + 1}$, which thus effectively doubles in size when $N$ is increased. However, when using a sample extraction using a key that has digits with predefined values, sample extraction for those digits may be skipped, allowing to effectively flexibly set the number of elements of the resulting LWE ciphertext also to a value that is not equal to the value $k \cdot N + 1$ dictated by the parameters of the GLWE encryption.

It is also possible to use keys that both have digits in common with other keys, and further digits that have predefined values. Surprisingly, this combination was found to work particularly well; in particular, it allows for a particularly efficient implementation of the programmable bootstrapping operation of the encrypted computation, in which the key switching (resulting in an encryption under a key switching output key that has digits in common with a key used for subsequent operations, as well as digits with predefined values) can be applied before a sample extraction, instead of first performing a sample extraction and then a key switching as in PBS implementations known today.

It is noted that the output key of the sample extraction (which is the same as the input key, but reinterpreted as a set of numbers instead of a set of polynomials) is not considered to be a separate key of the key set, different from the sample extraction input key. In particular, the keys from the key set that have common digits and/or predefined values, may be the input and output keys of the blind rotation and/or key switching and the input key of the sample extraction.

Accordingly, using the provided techniques provides more options in terms of cryptographic parameters, and allows to use a reduced amount of public key material for a given use-case. Moreover, for various cryptographic operations, an efficiency improvement can be obtained, as well as a smaller noise growth. Accordingly, for example, a more efficient computation of a Boolean circuit, an arithmetic circuit, a neural network inference, or a functional circuit may be obtained.

Generally, in various encrypted computations, it can be beneficial for performance reasons to use a key set having multiple keys for encrypting plaintexts and/or multiple keys for encrypting polynomials, and to switch between encryptions according to the respective keys throughout the computation. For example, this allows to use different parameters sets for respective blind rotations depending on the desired accuracy or precision of their respective results. In such a case, the provided techniques are particularly advantageous, by providing improved efficiency and a reduction in the size of the public key material needed, e.g., the key switching and/or bootstrapping keys.

In an embodiment, a sample extraction may be applied based on an encrypted rotation polynomial, for example, an encrypted rotation polynomial that represents an application of a lookup table to an input value. The sample extraction input key may have one or more digits with predefined values. Generally, the sample extraction may determine a resulting encryption of a coefficient of an encrypted input polynomial by determining respective elements of the resulting encryption corresponding to the respective digits of the sample extraction input key. If the sample extraction input key has digits with predefined values, the corresponding elements of the resulting encryption may be eliminated, leading both to a faster sample extraction, and to a smaller resulting encryption.

However, advantages discussed herein also apply when sample extraction is not applied to the output of a blind rotation. For example, a polynomial encrypted under a sample extraction input key may be used to pack multiple values. The sample extraction input key may be a partial key having one or more digits with predefined values. Encryptions of respective packed values may be obtained by applying respective sample extractions to the encrypted polynomial. In this case, because of the use of a partial key, the resulting encryptions can be smaller. As an illustrative example, 1024 messages may be packed in an encrypted polynomial with a partial key, e.g., a RLWE key, where all but the first 600 coefficients are filled with zeros. This ciphertext may be unpacked into e.g. 1024 respective encryptions. Advantageously, the resulting ciphertexts may be smaller, e.g., in this example having size 601 instead of 1025.

In an embodiment, the sample extraction input key may be the same as the blind rotation output key, e.g., the sample extraction may be applied to the encrypted rotation polynomial output by the blind rotation. This way, a more efficient programmable bootstrapping operation can be obtained. Namely, the programmable bootstrapping may comprise a modulus switching; followed by a blind rotation; followed by a sample extraction; optionally followed by a key switching. The improved sample extraction can make such a programmable bootstrapping more efficient.

In an embodiment, the sample extraction input key may further have one or more digits in common with the blind rotation input key. In particular, a programmable bootstrapping may be applied to an encryption under the blind rotation input key, and may result in an output encryption under that same blind rotation input key. By using a sample extraction input key that has digits in common with the blind rotation input key, this output encryption may be determined particularly efficiently. In particular, a key switching may be performed to obtain the output encryption, which can be implemented more efficiently due to the common digits. In particular, the sample extraction input key may be defined in such a way that its set of digits consists only of the digits of the blind rotation input key and the digits with predefined values. In this case, the sample extraction may directly result in the desired output encryption and the key switching may even be eliminated completely, making this option particularly efficient in terms of computation and storage.

In an embodiment, a programmable bootstrapping may be performed by performing a blind rotation; applying a key switching based on the polynomial obtained by the blind rotation; and applying a sample extraction based on the output of the key switching. The sample extraction may result in an encryption under a desired key, e.g., the key under which the input value of the blind rotation was encrypted, or another desired key. To this end, the key switching output key may be defined such that it comprises one or more digits with predefined values, and further comprises the digits of the desired key.

Accordingly, compared to the known programmable bootstrapping with a blind rotation, followed by a sample extraction, followed by a key switching, the order of the key switching and the sample extraction may be swapped. Moreover, the key switching may be a key switching acting on an encrypted polynomial, as opposed to a key switching acting on an encrypted value. Interestingly, this may lead to an efficiency improvement, since key switching of encrypted polynomials can be implemented more efficiently than key switching of encrypted values. In particular, the polynomial key witching may be implemented particularly efficiently using a Fast Fourier Transform (FFT), also known in this context as a Number Theoretic Transform (NTT). Moreover, due to using key switching of polynomials instead of key switching of values, the key switching keys may be smaller. These effects are particularly strong if the encryption is a RLWE encryption.

In an embodiment, by combining the blind rotation with key switchings with different key switching output keys, it is possible for the improved programmable bootstrapping to result in outputs with different desired keys. For instance, a further blind rotation may be applied according to the same blind rotation input and output keys, and its output may be used for a further key switching and a subsequent further sample extraction. For example, one desired key may be the blind rotation input key and another desired key may be a different key, for example, formed of a subset or superset of the digits of this blind rotation input key. This allows to efficiently combine bootstrappings with different inputs keys in a homomorphic computation, effectively using the polynomial key switching to switch between the keys. Also in this case, because the polynomial key switching has small key switching keys (in particular if a RLWE key switching is used), the encrypted computation may be performed using a particularly small amount of key material. It is particularly beneficial for the desired keys to have digits in common or even be subsets of one another, since this allows to reduce the size of bootstrapping keys as described herein.

In an embodiment, a key switching may be performed where the key switching input and output keys have one or more digits in common. This allows to perform the key switching particularly efficiently. In particular, a key switching may normally comprise combining respective key switching contributions for respective secret key elements of the key switching input key, computed based on respective components of the key switching key. When the input and output keys have digits in common, it is not necessary to determine those components, and instead, the elements from the input ciphertext can be taken. Also digits that occur in the key switching output key but not in the key switching input key can be handled efficiently, e.g., by adding zeros corresponding to the additional digits. Thus, in general, the key switching can be handled more efficiently, using a smaller key switching key, and with less noise.

In an embodiment, a key switching may be applied to one or more values encrypted under a common key switching input key, to obtain an encrypted key switching output polynomial based on the one or more values. In particular, the key switching can be a so-called packing key switching combining the value ciphertext(s) into a polynomial ciphertext. Also such value-to-polynomial key switchings can be improved by using common digits as described herein.

In particular, the digits of the key switching input key may be a subset of the digits of the key switching output key. In this case, the key switching may set to zero ciphertext elements of the key switching output that corresponding to the digits of the key switching output key that do not occur in the key switching input key. Accordingly, such a key switching has very low computational cost, does not use a key switching key, and does not add noise.

Similarly, the digits of the key switching input key may be a superset of the digits of the key switching output key. In this case, key switching may comprise key switching only ciphertext elements of the encrypted input value or polynomial, that correspond to digits of the key switching input key that do not occur in the key switching output key. Thus, in this case, the key switching has a smaller key switching key, a faster computation, and less resulting noise.

In an embodiment, a sequence of at least three keys may be used wherein the digits of a key are a subset of the digits of a subsequent key. For example, the digits of a first key may be a subset of the digits of a second key, and the digits of the second key may be a subset of the digits of a third key, and so on. This setup allows efficient key switchings between the different keys based on key switchings between subsequent keys as described herein. This way, an encrypted computation can be performed in which respective parts are performed with the smallest possible keys that provide a desired accuracy level, thus leading to a more efficient encrypted computation.

In an embodiment, multiple blind rotations may be performed using respective blind rotation input and output keys that have one or more digits in common. Similarly to key switching keys, blind rotation keys may comprise encryptions of respective digits of the blind rotation input keys. When using common digits for the input keys, also common encryptions of the digits can be used. In particular, the digits of a first blind rotation input key may be a subset of the digits of second blind rotation input key. For compatibility, the encryptions may use the same polynomial degree N; the blind rotation output keys may be the same, and the bases may be compatible in the sense that they are the same or one is a power of the other (e.g., base 8=2^3 with 6 levels and base 64=2^6 with 3 levels). In such cases, the bootstrapping key for the first input and output keys may be comprised in the bootstrapping key for the second input and output keys. Thus, the encrypted computation may use less key material.

The provided techniques for improved computations on encrypted data may be applied in a wide range of practical applications. Such practical applications include the encrypted evaluation of software programs without having access to plain data. For example, one may evaluate medical diagnostic software on medical data without having actual access to said medical data. Medical data may comprise a medical image. A medical image may comprise, e.g., multi-dimensional image data, e.g., to two-dimensional (2D), three-dimensional (3D) or four-dimensional (4D) images, acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM).

In an embodiment, the provided techniques may be used to evaluate a neural network on encrypted inputs. The party evaluating the neural network may or may not have plaintext access to the trained parameters of the neural network, e.g., weights and biases. In general, the techniques provided herein improve the efficiency of evaluating the neural network and/or reduce storage and transmission requirements for the used ciphertexts or key material.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Fig. 1a schematically shows an example of an embodiment of a cryptographic device;
Fig. 1b schematically shows an example of an embodiment of an encrypted computation system;
Fig. 2 shows an example of a key having digits with predefined values;
Fig. 3 shows an example of keys having digits in common;
Figs. 4a-4e show examples of programmable bootstrappings;
Figs. 5a-5e illustrate conversions between encryptions with different keys;
Fig. 6 schematically shows an example of an embodiment of a cryptographic method of performing an encrypted computation;
Fig. 7 schematically shows a computer readable medium having a writable part according to an embodiment;
Fig. 8 schematically shows a representation of a processor system according to an embodiment.

**DESCRIPTION OF EMBODIMENTS**

While the presently disclosed subject matter is susceptible of embodiment in many different forms, there are shown in the drawings and will herein be described in detail one or more specific embodiments, with the understanding that the. present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

First, some general information and notation is provided that applies to several embodiments. Throughout this specification, the parameter q represents the modulus for encrypted values, e.g., a positive integer. $\mathbb{Z}_q$ denotes the ring $\mathbb{Z}/q\mathbb{Z}$. The parameter N represents the size of various polynomials that are used and is typically a power of two. $\mathfrak{R}$ denotes the ring $\mathbb{Z}[X]/p(X)$ and $\mathfrak{R}_q$ denotes the ring $\mathbb{Z}_q[X]/p(X)$, where $p(X)$ is a cyclotomic polynomial, e.g., $p(X) = (X^N + 1)$ if $N$ is a power of two. $\chi_\sigma$ denotes a Gaussian distribution with a mean set to zero and a standard deviation set to $\sigma$. The symbol $\|$ denotes concatenation.

Various embodiments use LWE-type encryption. Such encryption may be based on the cryptographic hardness of the LWE family of problems, such as Learning With Errors (LWE) or Ring Learning With Errors (RLWE), or the more general Generalized Learning With Errors (GLWE) that covers both LWE and RLWE. Generally, an LWE ciphertext may comprise one or more mask values and a body value which is derived from the mask values and the plaintext value. The values are typically integers modulo a given modulus q. Various embodiments also use GLWE (Generalized Learning With Error)-type ciphertexts. A GLWE ciphertext may comprise one or more mask polynomials, and a body polynomial which is derived from the mask polynomials and a plaintext polynomial. A GLWE ciphertext may be defined modulo a modulus q and a quotient polynomial $p(X)$. A LWE ciphertext may be regarded as a particular kind of GLWE ciphertext where the quotient polynomial has degree one. A GLWE ciphertext that is not a LWE ciphertext, e.g., using polynomials that are not of constant degree, is also referred to as a polynomial ciphertext. Another particular kind of ciphertext is a RLWE (Ring Learning With Errors) ciphertext where the number of mask polynomials is one.

In particular, a GLWE ciphertext of a message $M \in \mathfrak{R}_q$ under the secret key $\mathbf{S} \in \mathfrak{R}^k$ may be defined as follows:

$$\mathrm{CT}^{\cdot} = \left(A_1, \cdots, A_k, B = \sum_{i=1}^k A_i \cdot S_i + \tilde{M} + E\right)$$

$$\in \mathrm{GLWE}_\mathbf{S}^q\left(\tilde{M}\right) \subseteq \mathfrak{R}_q^{k+1}$$

Here, $\mathbf{S} = (S_1, \cdots, S_k) \in \mathfrak{R}^k$ is a GLWE secret key with coefficients sampled e.g., from a uniform binary, uniform ternary or Gaussian distribution. A secret key element may be denoted $S_i = \sum_{j=0}^{N-1} s_{i,j} X^j$. The polynomial coefficients $s_{i,j}$ of the respective polynomials of a secret key, are referred to as the digits of the secret key. In the particular case of LWE, the polynomials are degree-0 polynomials, e.g., the constant term, being the value itself, is the only digit.

Further, $\tilde{M}$ may be an appropriate scaling of the input message. Mask elements $\{A_i\}_{i=1}^k$ are polynomials in $\mathfrak{R}_q$ with coefficients sampled e.g. from the uniform distribution in $\mathbb{Z}_q$, B is also referred to as the body element. E is a noise (error) polynomial in $\mathfrak{R}_q$ such that its coefficients are sampled e.g. from a Gaussian distribution $\chi_\sigma$. The parameter $k$ is a positive integer and represents the number of polynomials in the GLWE secret key.

To simplify notations, sometimes the notation $S_{k+1} = -1$ is adopted. This value or polynomial $S_{k+1}$ is however not considered to be part of the GLWE secret key. The GLWE secret key may comprise only the respective secret elements $S_i$ corresponding to the respective mask elements $A_i$, not the body element $B$. Thus the digits of the GLWE secret key may comprise only the digits of these secret elements (values or polynomials) that correspond to body elements (values or polynomials).

In this example, a LWE ciphertext is a GLWE ciphertext with N = 1. In this case, the parameter $n = k$ may be considered for the size of the LWE secret key and both the ciphertext and the secret may be denoted with a lower case, e.g. $ct^q$ and **s**, respectively. A RLWE ciphertext in this example is a GLWE ciphertext with $k = 1$ and N > 1, e.g., a 2-power.

Although the integer q is used throughout this specification to denote a ciphertext modulus, it is noted that multiple ciphertext moduli may be used within an encrypted multiplication, e.g., with modulus switching being used to align ciphertexts under the same q when needed.

However, in principle, it is not needed to use LWE-type ciphertexts. Also for other type of ciphertexts, e.g., NTRU-based ciphertexts, keys may be defined that have digits in common and/or with predefined values, and various advantages described herein apply in such a setting as well.

The above examples describe secret-key, symmetric encryption variants. The techniques provided herein apply equally to public-key variants as are known per se. In the latter, case, for example, the above secret key may be used as the private key, wherein the public key comprises one or more encryptions of zero, e.g., see R. Rothblum, "Homomorphic encryption: From private-key to public-key", Theory of Cryptography (TCC 2011), vol. 6597 of Lecture Notes in Computer Science, pp. 219-234, Springer, 2011 (incorporated herein by reference).

The provided techniques can also be used in encrypted computations based on multi-key fully homomorphic encryption. In this setting, respective parties may have respective secret keys (for example, generated as regular FHE secret keys), and an encrypted computation may be performed on ciphertexts encrypted under the respective secret keys. In particular, the multi-key FHE may be based on a conversion operation in which a ciphertext encrypted under one of the respective keys is converted into a (typically larger) ciphertext encrypting the same message under a combination of the secret keys. For instance, given respective secret keys $\vec{s}^{(A)} \in \mathbb{Z}^{n^{(A)}}$ and $\vec{s}^{(B)} \in \mathbb{Z}^{n^{(B)}}$, a concatenated secret key may be defined, e.g., as

$$\vec{s} = \left( \vec{s}^{(A)} || \vec{s}^{(B)} \right) \mathbb{Z}^{n^{(A)}+n^{(B)}}$$

. A ciphertext under a respective secret key, e.g., $\vec{s}^{(A)}$, may be converted into a ciphertext encrypting the same message but under the concatenated secret key $\vec{s}$. The encrypted computation may be performed on the ciphertexts encrypted under the combined secret key using the techniques described herein.

Various embodiments operate in the TFHE setting, meaning that ciphertexts are used that support a programmable bootstrapping (PBS). The programmable bootstrapping may take as input a ciphertext, and output a ciphertext of the same message, or a function of that message (in other words, a lookup table applied to that message), with input-independent noise. The PBS may comprise a blind rotation that evaluates the homomorphic decryption of the input ciphertext in the exponent of a polynomial.

In particular, the programmable bootstrapping may take as input a ciphertext encrypting a message m; a bootstrapping key; and an encryption of a lookup table L. The programmable boostrapping may output an encryption with a fixed level of noise encrypting the message L[m]. Such a programmable bootstrapping that uses a blind rotation is for example known from I. Chillotti et al., "TFHE: fast fully homomorphic encryption over the torus", J. Cryptol., 33(1):34-91, 2020, or from L. Ducas et al., "FHEW: bootstrapping homomorphic encryption in less than a second", proceedings EUROCRYPT 2015. A blind rotation is also known as an updating of an accumulator, see, e.g., D. Micciancio et al., "Bootstrapping in FHEW-like Cryptosystems", https://eprint.iacr.org/2020/086 (incorporated herein by reference).

A programmable bootstrapping is typically implemented in the art by performing a modulus switching; followed by a blind rotation; followed by a conversion of the blind rotation result to a value ciphertext, e.g., by means of a sample extraction followed by an optional key switching. Sample extraction is also known as extraction from an accumulator. Such an implementation is for example described in the LWE setting in "Programmable bootstrapping enables efficient homomorphic inference of deep neural networks" and in "Bootstrapping in FHEW-like Cryptosystems". Programmable bootstrapping in in the NTRU setting is known from "FINAL: Faster FHE instantiated with NTRU and LWE" and "NTRU-v-um: Secure Fully Homomorphic Encryption from NTRU with Small Modulus".

The modulus switching may essentially scale the encrypted input of the programmable bootstrapping, resulting in a scaled input, encrypted under the same key as the original input. Since the modulus switching is typically applied directly before the blind rotation and it does not change the key under which a value is encrypted, it is sometimes left implicit in this specification. The blind rotation may evaluate a homomorphic decryption of encrypted input value in the exponent of a polynomial, e.g., by computing $X^{-\mu' \cdot} \cdot v$, where $\mu'$ is a scaling of the input value that is encrypted, and $v$ is a polynomial encoding the lookup table. A blind rotation can also be applied outside of the context of a programmable bootstrapping. For example, a blind rotation without the use of lookup $v$ is also referred to as a monomial lift.

Programmable bootstrapping typically makes use of gadget ciphertexts. In particular, programmable bootstrapping may be based on computing external products of encrypted polynomials with such gadget ciphertexts. Generally, a gadget ciphertext may be defined as a ciphertext that comprises multiple constituent ciphertexts encrypting respective values based on a plaintext and defined based on a gadget matrix. For LWE/GLWE, the gadget ciphertext can be a GGSW ciphertext as known e.g. from "Programmable bootstrapping enables ..." (incorporated herein insofar as the description of GGSW is concerned). In the NTRU setting, the gadget encryption can for example be the NGS encryption of C. Bonte et al., "FINAL: Faster FHE instantiated with NTRU and LWE", https://ia.cr/2022/074 (incorporated herein by reference insofar as the definition of NGS is concerned); or the gadget NTRU encryption of K. Kluczniak, "NTRU-ν-um: Secure Fully Homomorphic Encryption from NTRU with Small Modulus", https://ia.cr/2022/089 (incorporated herein by reference insofar as the definition of gadget NTRU is concerned). As is known per se, a NTRU bootstrapping may be applied to LWE-encrypted values, e.g., an encrypted computation can be performed on LWE-encrypted values using a NTRU bootstrapping. This is described for example in C. Bonte et al., "FINAL: Faster FHE instantiated with NTRU and LWE", https://ia.cr/2022/074.Generally, it is possible in TFHE-like schemes to pick a secure cryptographic parameter set in order to minimize the computation cost while fitting the needed precision. Interestingly, such parameters may be selected independently from the quantity of homomorphic operations and the depth of the circuit evaluated.

The secret keys used in this specification, may be sparse secret keys. A sparse binary (resp. ternary) secret key of hamming weight $h \in \mathbb{N}$ may be defined as a secret key such that its polynomial coefficients are in {0,1} (resp. {-1, 0, 1}) and contain exactly $h$ non-zero coefficients. When using such keys, the dimension $k$, the polynomial ring $\mathfrak{R}_q$ (including the polynomial degree N), the distribution (binary or ternary), and the hamming weight $h$ may be publicly known. Sparse secret keys can be beneficial for homomorphic computation, see, e.g., J. H. Cheon et al., "Homomorphic encryption for arithmetic of approximate numbers", proceedings ASIACRYPT 2017 (incorporated herein by reference).

More generally, various types of secret key may be used, with respective parameters that are publicly known, e.g., to the party performing the encrypted computation. Such parameters typically include the size of the secret key (e.g., the dimension $k$ and the polynomial ring for elements of the secret key), and the ring used for the encrypted computation. For example, the following types of secret key, with the indicated public knowledge, may be used:

| Key Type | Dimension | Ring | Distribution | Hamming Weight |
|---|---|---|---|---|
| Uniform Binary | $k$ | $\mathfrak{R}_q$ | $U(\{0, 1\})$ | unknown |
| Uniform Ternary | $k$ | $\mathfrak{R}_q$ | $U(\{-1,0,1\})$ | unknown |
| Gaussian | $k$ | $\mathfrak{R}_q$ | $N(\mu, \sigma^2)$ | unknown |
| Uniform | $k$ | $\mathfrak{R}_q$ | $U(\mathbb{Z}_q)$ | unknown |
| Sparse Binary | $k$ | $\mathfrak{R}_q$ | - | $h$ |
| Sparse Ternary | $k$ | $\mathfrak{R}_q$ | - | $h$ |

Throughout this specification, plaintexts may be referred to as integers modulo $\mathbb{Z}_q$. Equivalently, such values may be regarded as values from a discretization of the real torus $\mathbb{T} = \mathbb{R}/\mathbb{Z}$, as is done in several of the references mentioned above. Namely, integers modulo a given modulus and discretized torus elements may be used interchangeably, in particular, there exists an isomorphism between $\mathbb{Z}_q$ and $\frac{1}{q}\mathbb{Z}/\mathbb{Z}$ as also noted in the literature, e.g., see C. Boura et al., "CHIMERA: Combining Ring-LWE-based Fully Homomorphic Encryption Schemes", J. Math. Cryptol., 14(1):316-338, 2020.

The programmable bootstrapping operation in TFHE-like schemes makes them an appealing choice for a wide range of applications. Because bootstrapping is relatively efficient compared to many other FHE schemes, it is much more feasible to perform relatively complex computations, e.g., with a multiplicative depth of at least 10, at least 50, or at least. 100. In particular, the cryptographic parameters of TFHE-like schemes can be selected based on the desired precision and resulting computational cost, independently from the quantity of homomorphic operations and their circuit depth. In other FHE schemes, in contrast, bootstrapping can be so inefficient that, in practice, these schemes are typically applied in a levelled way, meaning that their parameters are selected depending on a given computation such that it can be performed without the need for bootstrapping. Such a levelled approach is not feasible for more complex computations, however, so in such cases, TFHE-like schemes are particularly beneficial.

In particular, in the LWE setting, the security of GLWE-based ciphertexts is based on the distribution of the secret key, and on three main parameters: $n = kN$, where $N$ is the degree of the quotient polynomial, $k$ is the number of random mask polynomials of a ciphertext, and $n$ is the length of the secret key; $q$, the modulus; and $\sigma$, the statistical parameter of the noise, e.g., its standard deviation. Given these parameters, it is known per se how to estimate a degree of security that is provided, see, e.g., M. Albrecht et al., "On the concrete hardness of Learning with Errors", Journal of Mathematical Cryptology, 9(3):169-203, 2015 (incorporated herein by reference).

In embodiments herein, the parameters of TFHE-like ciphertexts that are used may be selected based on a desired security level and based on a desired accuracy of operations such as linear combination of ciphertexts and/or applying a programmable bootstrapping, in other words, a noise level resulting from applying these operations. Interestingly, in the TFHE setting, security parameters may be selected independently of the computational complexity, e.g. independently of the multiplicative depth of the computation. This is unlike for non-TFHE-like schemes, where the security parameters are typically chosen to limit or eliminate bootstrappings.

In particular, LWE-based ciphertexts and/or GLWE-based ciphertexts used in the TFHE setting herein may use a relatively small modulus, e.g., of at most 32 bits, at most 64 bits, or at most 128 bits. This modulus is typically selected independent from the computation to be carried out, e.g., it is selected depending on a desired precision and/or efficiency. Parameters $N$, $k$, and/or $\sigma$ may be selected to achieve a desired security level, also typically independently from the computation to be carried out. For example, N may be set to at least 512 and/or at most 2048 or 4096, e.g., to 1024. For example, in an embodiment, RLWE is used with N at least 512 and/or at most 2048 or 4096, e.g., 1024, and $k = 1$. Such values for N are not typically used in non-TFHE-like encryption schemes, where such values would severely restrict the computations that can be performed; instead, in non-TFHE-like schemes, $q$ and $N$ are typically both selected based on the desired security level, such that q may be much larger.

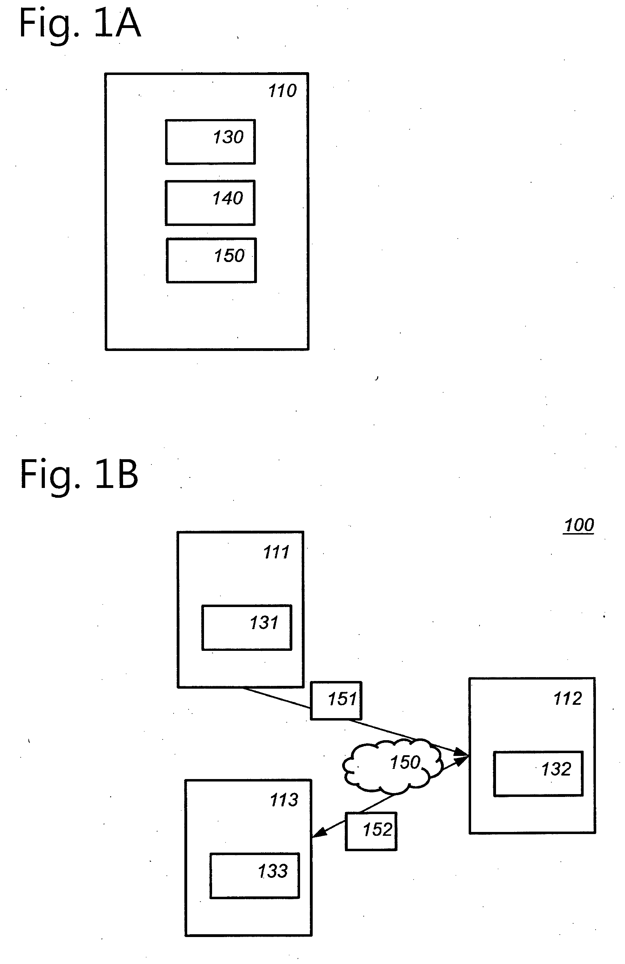

**Fig. 1a** schematically shows an example of a cryptographic computation device 110. Device 110 may be for performing an encrypted computation.

Device 110 may comprise a processor system 130, a storage 140, and a communication interface 150. Storage 140 may comprise local storage, e.g., a local hard drive or electronic memory. Storage 140 may comprise non-local storage, e.g., cloud storage. In the latter case, storage 140 may comprise a storage interface to the non-local storage. For example, storage 140 may be for storing values and polynomials encrypted under one or more encryption keys. The keys form a key set. Device 110 typically does not have access to the keys of the key set in plain form. Storage 140 may contain additional data, e.g., bootstrapping and/or key switching keys as also discussed elsewhere.

Device 110 may communicate internally, with other devices, external storage, input devices, output devices, and/or one or more sensors over a computer network. The computer network may be an internet, an intranet, a LAN, a WLAN, etc. The computer network may be the Internet. The device may optionally comprise connection interface 150 which is arranged to communicate with other devices as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. Communication, e.g., internal communication, may use other communication protocols or media, e.g., an internal data bus.

In device 110, the communication interface 150 may be used to send or receive digital data. For example, device 110 may be configured to receive or send data representing one or more encrypted values and/or encrypted polynomials, e.g., representing inputs and/or outputs of the encrypted computation. As another example, the communication interface 150 may be used to receive data representing one or more bootstrapping keys and/or one or more key switching keys.

The execution of device 110 may be implemented in a processor system 130, e.g., one or more processor circuits, e.g., microprocessors, examples of which are shown herein. Device 110 may comprise multiple processors, which may be distributed over different locations. For example, device 110 may use cloud computing.

Processor subsystem 130 may be configured to apply a blind rotation to an input value encrypted under a blind rotation input key of the key set to obtain a rotation polynomial encrypted under a blind rotation output key of the key set. The rotation polynomial may for example represent an application of a lookup table to the input value.

Processor subsystem 130 may be further configured to perform a sample extraction and/or a key switching. Processor subsystem 130 may be configured to apply the sample extraction to a polynomial encrypted under a sample extraction input key of the key set to obtain an encrypted coefficient of the polynomial. Instead or in addition, processor subsystem 130 may be configured to apply the key switching to a value or polynomial encrypted under a key switching input key of the key set to obtain a key switching output encrypted under a key switching output key of the key set.

A first key and a second key of the key set may have one or more digits in common, and/or at least one key of the key set has one or more digits with predefined values. Although the keys themselves are typically not known to device 110, the information regarding which digits are common or predefined may be known to device 100, and accordingly, device 110 may be configured to perform the encrypted computation making use of this information regarding common and predefined digits, allowing the computation to be performed in improved ways as described herein.

Processor subsystem 130 may be configured to obtain one or more inputs to the encrypted computation, e.g., one or more encrypted input values and/or one or more encrypted input polynomials. Processor subsystem 130 may be configured to output one or more outputs of the encrypted computation, e.g., comprising one or more encrypted output values and/or one or more encrypted output polynomials. For example, processor subsystem 130 may obtain the inputs and/or output the outputs from/to storage 140 and/or from/to another party via communication interface 150.

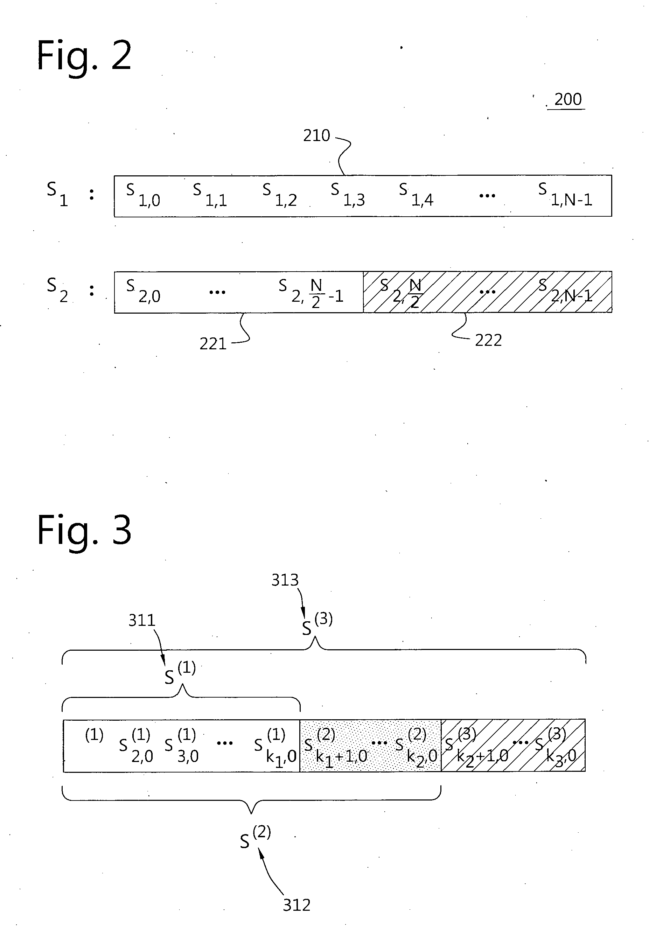

Some of the figures show functional units that may be functional units of the processor system. For example, a figure may be used as a blueprint of a possible functional organization of the processor system. The processor circuit(s) are not shown separate from the units in most figures. For example, the functional units shown in figures 2-5 (see below) may be wholly or partially implemented in computer instructions that are stored at a device such as device 110, e.g., in an electronic memory of device 110, and are executable by a microprocessor of device 110. In hybrid embodiments, functional units are implemented partially in hardware, e.g., as coprocessors, e.g., arithmetic and/or cryptographic coprocessors, and partially in software stored and executed on device 110.

For example, device 110 may be a device for performing an encrypted computation. The encrypted computation may use homomorphic encryption cryptography. For example, the device 110 may be used to perform an encrypted computation, e.g., the device may perform the computation even though said data is received in encrypted form, e.g., from a data provider, and even though the device 110 is not able to decrypt the data. The computation may involve blind rotations, key switchings, and/or sample extractions as described herein. The computation may comprise various other homomorphic encryption operations, e.g., linear operations, e.g., an addition, a subtraction, and/or a scalar multiplication; multiplications; univariate function evaluations; and the like.

For example, storage 140 may store encrypted data items, e.g., received from one or more data providers or generated as intermediate results or end results, e.g., outputs, of the computation. Typically, most or all data items on which the computation of device 110 is performed, are encrypted with a key (or keys) that is not known to device 110- that is device 110 may not be configured to obtain the plain data items corresponding to the encrypted data items, e.g., such as stored in storage 140. The decryption key in plain form is secret for device 110, though the encryption/decryption key may be available in encrypted form.

**Fig. 1b** schematically shows an example of an embodiment of an encrypted computation system 100. System 100 is configured for performing an encrypted computation using homomorphic encryption, e.g., fully homomorphic encryption.

The system 100 in this example comprises a key generation device 111, a data provider device 113 and a cryptographic device 112. Key generation device 111 may be combined with data provider device 113 in a single device. Device 112 may be configured to receive encrypted data items from a data provider 113. At least one or more data items may be received in encrypted form. One or more further data items may be received in plain format. Device 112 may be configured to receive key material, e.g., bootstrapping and/or key switching keys, for performing the encrypted computation from the key generation device 111.

Device 112 may perform the computation as described herein on the received data items and possibly also on stored data items. Interestingly, the computation may be performed by the device on the encrypted data, without decrypting the data, e.g., without converting encrypted data items to data in a plain format.

Device 112 in this example may be based on device 110 of Fig. 1a, e.g., may comprise processor system 130, storage 140, and/or communication interface 150 of Fig. 1a. Each of the devices 111, 112, 113 may be based on in general on the hardware configuration of device 110 of Fig. 1a, e.g., may each comprise a processor system, storage, and/or communication interface as in Fig. 1a.

Although not shown in this figure, the encrypted computation system 100 may comprise multiple cryptographic devices, e.g., two, three or more than three. The encrypted computation may be distributed among the multiple cryptographic devices. The cryptographic devices may exchange intermediate computation results, typically encrypted, among each other. Each cryptographic device may be implemented like cryptographic device 112, and may perform encrypted operations as described herein.

Homomorphic encryption schemes can be applied in many settings. For example, encrypted cryptographic device 112 may be operated by a cloud provider. The cloud provider may offer computation and storage services to its clients. By employing homomorphic encryption, data provider device 113, e.g., a client of the cloud provider, can send their data in encrypted form. The cloud provider can still perform the required computations, and/or the required storage, but is not able to know the corresponding to plain data. For example, data provider device 113 may use an encryption key of a type corresponding to the particular homomorphic encryption system used to encrypt the data items. When computations results are received by data provider 113 from encrypted computing device 112, a corresponding decryption key may be used to decrypt the encrypted data items. Encryption and decryption keys may be the same-and typically are so.

For example, encrypted computation system 100 may be configured to train machine-learning models, e.g., image classifiers, e.g., medical models, without the encrypted computing devices having access to the plain data items. For example, linear regression may be performed on the input data, possibly, even without bootstrapping. For example, back-propagation may be performed on the input data, possibly, with bootstrapping. The resulting model parameters may be returned to an entity who is in possession of the decryption key. This enables multiple providers of medical data to pool their data, by sending the data to a cloud provider. The cloud provider then returns the model parameters, without ever having access to the plain data. Encryption keys may be equal to decryption keys.

After the model is trained, the encrypted computation system 100 may be used to offer the model, say, for use with medical data. This can be done with plain model parameters or encrypted model parameters-in both cases with encrypted data, e.g., encrypted input, intermediate and output data. Using plain model parameters is usually much more efficient. In both cases, an effect of the system is that a computation is performed, say an image classification, e.g., a medical image classification, without the computer knowing the plain data items. For example, a mammogram may be evaluated for cancer, without the image ever being in the plain at a cryptographic device 112 and without any cryptographic device 112, or a coalition of such devices, knowing what the outcome of the cancer evaluation is. From a privacy point of view it may be acceptable to operate a plain model on encrypted privacy sensitive data, while it might not be acceptable to operate on plain privacy sensitive data.

Other applications involve database services, e.g., looking up encrypted data in an encrypted database; for example, the computation may be a comparison between an input item and a database item. For example, multiple computations may be combined to produce a database index that matches an index. For example, the database, may be a genomic database, and the input a gene sequence. For example, system 100 may be used for protected control of a device. For example, a device, even a large device such as a power plant, may send sensor values to a cryptographic device 112, and receive encrypted control signals in return. The control signals being computed from the sensor signals. An attacker of the system may be able to determine the contents of data going to and from one or more cryptographic devices 112, or even gain access to intermediate data of these devices, but he will not be helped by that as the data is encrypted. Even a full break of all cryptographic devices 112 of a system 100 will not reveal the data, as the decryption key is not known to these devices. Computing the control signal may involve such mathematical operations as linear algebra, averages, matrix multiplication, polynomial evaluations, and so on, all of which are possible to execute with homomorphic encryption operations.

For example, a pool of encrypted data items may be maintained in the encrypted computation system; a subset of these may be received and another subset may be the result of an encrypted computation, e.g., intermediate results. For example, a cryptographic device 112 may be configured to apply a homomorphic encryption operation to one, two or more encrypted data items in a pool, e.g., a collection of input and/or intermediate and/or output values. The result may be a new encrypted data item that may be stored in the pool. The pool may be stored in a storage of the encrypted computation system. This may be local storage or a distributed storage. In the latter case, it may happen that one or more encrypted data items are represented multiple times in the pool. Encrypted data items may be sent from one computing device to another, e.g., if their values are needed elsewhere. The pool may be implemented in various ways, e.g., as a register file, an array, various data structure, and so on.

The encrypted data items may represent all kinds of data. For example, encrypted data items may represent numbers that need to be averaged, or which are used for linear regression, etc. For example, the encrypted data items may represent an image. For example, each pixel of the image may correspond to one or more encrypted data items. For example, a grey-scale pixel may be represented by a grey level, which in turn may be represented by a single encrypted data item. For example, 256 grey levels may be encoded in a single encrypted data item. For example, a colour pixel may be represented as multiple colour levels, e.g., RGB levels, which in turn may be represented by a tuple of encrypted data items. For example, three 256-level colours may be encoded as respective encrypted values.

A set of homomorphic encryption operations may be defined for the computation. For example, from the homomorphic encryption operations a network or circuit of operations may be built that together implement the computation, e.g., by a compiler device as described for Fig. 1b, or by the cryptographic device itself. For example, the operations may include Boolean operations. The way the homomorphic encryption operations are combined, e.g., which operation is applied to which operand in the pool, determines the computation that is being performed. For example, the computation may be represented as a list of homomorphic encryption operations that are to be performed together with an indication on which encrypted data item they are to be performed. The network or circuit may indicate to the cryptographic device 112 when to carry out a blind rotation, sample extraction, and/or key switching. For example, the network or circuit may indicate digits of keys used in the respective operations being in common or having predefined values, such that the cryptographic device can perform the encrypted computation adapted to the shape of the used keys.

**Fig. 2** shows a detailed, yet non-limiting, example of a key having one or more digits with predefined values. A key with digits with predefined values is also referred to herein as a partial secret key, in particular, a partial GLWE key, a partial LWE key, a partial NTRU key, etc. This is in contrast to keys known in the art, in which each digit typically has at least two possible values that, when generating the key, are attained with a non-zero probability.

In particular, the figure illustrates a partial secret key 200, e.g., a GLWE key, comprising two polynomials where, for the purpose of the illustration, the coefficients of the polynomials are flattened into arrays of coefficients. The key 200 is defined as:

$$\vec{S} = (S_1, S_2) \in \mathfrak{R}_q^2 \text{ with } S_1 = \sum_{j=0}^{N-1} s_{1,j} X^j \text{ and } S_2 = \sum_{j=0}^{N-1} s_{2,j} X^j$$

where the digits $s_{1,0}, \cdots, s_{1,N-1}$, 210 of the first polynomial and a subset $s_{2,0}, \cdots, s_{2,\frac{N}{2}-1}$, 221 of digits of the second polynomial are random, e.g., selected from the uniform binary distribution; and the remaining digits $s_{2,\frac{N}{2}}, \cdots, s_{2,N-1}$, 222 are set to a predefined value, e.g., to zero.

More generally, in a partial secret key, only a publicly predetermined part of its digits may be random elements from a probability distribution, e.g., a joint distribution, or distributions $\mathcal{D}_i$. The remaining digits may be filled with publicly predetermined elements. It may be publicly known where those predetermined elements are, and where each random element from a distribution is.

Mathematically, a partial secret key may be defined as a secret key that is parametrized with:

- a public vector of indices $\mathcal{R} = (\mathcal{R}_1, \mathcal{R}_2, \cdots)$, representing the part of the secret key filled with random elements, e.g., $\mathcal{R}_i \subseteq \{1, \cdots, k\} \times \{0, \cdots, N-1\}$;

- a public vector of distributions $\mathcal{D} = (\mathcal{D}_1, \mathcal{D}_2, \cdots)$, associated with $\mathcal{R}$;

- a public vector of indices $\mathcal{K} = (\mathcal{K}_1, \mathcal{K}_2, \cdots)$, representing the part of the secret key filled with predetermined elements, e.g., $\mathcal{K}_i \subseteq \{1, \cdots, k\} \times \{0, \cdots, N-1\}$;

- a public vector of values

$$\mathcal{V} = (\mathcal{V}_1, \mathcal{V}_2, \cdots)$$

associated with $\mathcal{K}$, e.g.,

$$\mathcal{V}_i \in \mathbb{Z}_q.$$

In this mathematical description, a partial secret key may satisfy $|\mathcal{R}| = |\mathcal{D}|$ and

$$|\mathcal{K}| = |\mathcal{V}|; \; \bigcup_{x \in \mathcal{R} \cup \mathcal{K}} x = \{1, \cdots, k\} \times \{0, \cdots, N-1\}; \; \bigcup_{x \in \mathcal{K}} x \neq \varnothing$$

(e.g., there is at least one digit with a predefined value); $\forall x, y \in \mathcal{R} \cup \mathcal{K}, x \neq y x \cap y = \varnothing; \; \forall 0 \leq \alpha \leq |\mathcal{R}|, \forall (i,j) \in$

$$\mathcal{R}_\alpha, s_{i,j} \hookleftarrow \mathcal{D}_\alpha;$$

and $\forall 0 \leq \alpha \leq |\mathcal{K}|, \forall (i,j) \in \mathcal{K}_\alpha, s_{i,j} = \mathcal{V}_\alpha$.

For example, consider partial secret key 200. This key contains 2 polynomials, where the second one is composed of a first half 221 filled with random coefficients and the second part 222 (the predetermined part) is filled with zeros. This key may be represented according to the above mathematical description by: $\mathcal{R} = (\mathcal{R}_1)$ with

$$\mathcal{R}_1 = \{(1,\beta)|0 \le \beta < N\} \cup \left\{(2,\beta)|0 \le \beta < \frac{N}{2}\right\}; \quad \mathcal{D} = (\mathcal{D}_1) \quad \text{with} \quad \mathcal{D}_1 = \mathcal{U}(\{0,1\}); \quad \mathcal{K} = \quad (\mathcal{K}_1) \quad \text{with}$$

$$\mathcal{K}_1 = \left\{(2,\beta)|\frac{N}{2} \le \beta < N\right\} \text{; and}$$

$$\mathcal{V} = (\mathcal{V}_1)$$

with

$$\mathcal{V}_1 = 0.$$

**Fig. 3** shows a detailed, yet non-limiting, example of keys having one or more digits in common. Such keys are also referred to herein as shared randomness secret keys. In other words, such keys have public knowledge about shared coefficients.

An example of this is illustrated in the figure, where 3 different secret keys, e.g., GLWE keys: $\vec{S}^{(1)}$, 311; $\vec{S}^{(2)}$, 312; and $\vec{S}^{(3)}$, 313 are shown.

In particular, as illustrated in this figure, the keys 311-313 may be LWE secret keys, e.g., $N_1 = N_2 = N_3 = 1$. As illustrated in the figure, key $\vec{S}^{(3)}$, 313 in this example includes (in this case, as its leading coefficients) all the coefficients of $\vec{S}^{(2)}$, 312; and $\vec{S}^{(2)}$, 312 includes (in this case, in its leading coefficients) all the coefficients of $\vec{S}^{(1)}$, 311.

Mathematically, a set of multiple keys having digits in common may be defined as a structure **SRSK** of shared randomness secret keys containing:

- a list $\mathcal{L} = \left(\vec{S}^{(1)}, \vec{S}^{(2)}, \cdots\right)$ of secret keys; and
- a set $S$ of sharing relations between keys.

For a secret key $\vec{S}^{(x)}$ with dimension $k_x$ and polynomial size $N_x$, the digits (coefficients) of the secret key may be denoted: $\left\{s_{i,j}^{(x)}\right\}_{1 \le i \le k_x}^{0 \le j < N_x}$. Equivalently, $\vec{S}^{(x)} = \left(S_1^{(x)}, \cdots, S_{k_x}^{(x)}\right)$ with $S_i^{(x)} = \sum_{i=0}^{N_x-1} s_{i,j}^{(x)} X^j$ for $1 \le i \le k_x$.

The set of sharing relations may be defined as a non-empty set of elements of the form $(x, \vec{v}, y, \vec{w}, f)$ where: $1 \le x, y \le |\mathcal{L}|$, $x \ne y$, $|\vec{v}| = |\vec{w}|$, $\forall v_i \in \vec{v}$, $v_i \in \{1, \cdots, k_x\} \times \{0, \cdots, N_x - 1\}$, $\forall w_i \in \vec{w}$, $w_i \in \{1, \cdots, k_y\} \times \{0, \cdots, N_y - 1\}$, $f: \mathbb{Z} \leftarrow \mathbb{Z}$, where such an element means that: $\forall 1 \le i \le |\vec{v}|$, $s_{v_i}^{(x)} = f\left(s_{w_i}^{(y)}\right)$. In particular, $f$ can be, and in many cases is, the identity function.

In particular, the example illustrated in this figure may be described mathematically as the list $\mathcal{L} = \left(\vec{S}^{(1)}, \vec{S}^{(2)}, \vec{S}^{(3)}\right)$ where N = 1, and $\vec{S}^{(i)} = \left(s_{1,0}^{(i)}, \cdots, s_{k_i,0}^{(i)}\right)$ for $1 \le i \le 3$. The set S may be defined as follows:

$$S = \{(1, \vec{v}, 2, \vec{v}, x \mapsto x), (2, \vec{w}, 3, \vec{w}, x \mapsto x)\}$$

where $\vec{v} = ((1,0), \cdots, (k_1, 0))$ represents the shared coefficients between $\vec{S}^{(1)}$, 311 and $\vec{S}^{(2)}$, 312 and where $\vec{w} = ((1,0), \cdots, (k_2, 0))$ represents the shared coefficients between $\vec{S}^{(2)}$, 312 and $\vec{S}^{(3)}$, 313.

In particular, using shared randomness secret keys, a key switching between a key switching input key and a key switching output key may be implemented more efficiently. This is now illustrated for LWE-type keys (e.g., LWE keys for encrypting values, and/or GLWE keys for encrypting polynomials) with respect to the keys shown in Fig. 3.

In particular, a key switching may be performed between shared randomness secret keys, e.g., $\vec{S}^{(1)}$, 311 and $\vec{S}^{(2)}$, 312, where the set of digits of one key is a subset of the set of digits of the other key. In particular, as illustrated in the figure, the keys may be LWE secret keys, e.g., $N = 1$. For the purpose of the discussion below, key 311 may be denoted $\vec{s}^{(1)} = \left(s_1^{(1)}, \cdots, s_{n_1}^{(1)}\right)$ and key 312 may be denoted $\vec{s}^{(2)} = \left(s_1^{(2)}, \cdots, s_{n_2}^{(2)}\right)$, with $n_1 < n_2$ and $s_i^{(1)} = s_i^{(2)}$ for $1 \le i \le n_1$.

As a first example, a key switching may be performed from the smaller key 311 to the larger key 312. The digits of the key switching input key 311 may be a subset of the digits of the key switching output key 312. In this case, the key switching may be performed by setting to zero ciphertext elements of the key switching output corresponding to the digits of the key switching output key 312 that do not occur in the key switching input key 311.

In particular, a ciphertext $\mathrm{ct} = \left(a_1, \cdots, a_{n_1}, b\right) \in \mathbb{Z}_q^{n_1+1}$ under the secret key $\vec{s}^{(1)}$, 311, may be key switched to the secret key $\vec{s}^{(2)}$, 312, by adding zeros at the end of the ciphertext, outputting $\left(a_1, \cdots, a_{n_1}, 0, \cdots, 0, b\right) \in \mathbb{Z}_q^{n_2+1}$.

This improves computational efficiency, since a regular key switch of a ciphertext of size $n_1$ may be avoided; and reduces noise, since adding a linear combination of noises may be avoided.

As a second example, a key switching may be performed from the larger key 312 to the smaller key 311. The digits of the key switching input key 312 may be a superset of the digits of the key switching output key 311. Such a key switching is also referred to as "chunked key switching". In this case, the key switching may comprise key switching only ciphertext elements of the encrypted value or polynomial corresponding to digits of the key switching input key 312 that do not occur in the key switching output key 311.

In particular, consider a ciphertext $\mathrm{ct}' = \left(a_{1\prime}, \cdots, a_{n_2}{}', b'\right) \in \mathbb{Z}_q^{n_2+1}$ under the secret key $\vec{s}^{(2)}$, 312. The key switch to the secret key $\vec{s}^{(1)}$, 311, may be improved because of the shared randomness as follows. The parts $(a_{1\prime}, \cdots, a_{n_1}{}')$ and $b'$ may be reorganized into a temporary ciphertext: $\mathrm{ct}'' = \left(a_{1\prime}, \cdots, a_{n_1}{}', b'\right) \in \mathbb{Z}_q^{n_1+1}$. The part $(a_{n_1+1}{}', \cdots, a_{n_2}{}')$ may be key switched, e.g., with a regular key switch procedure. E.g., the ciphertext $\left(a_{n_1+1}{}', \cdots, a_{n_2}{}', 0\right) \in \mathbb{Z}_q^{n_2-n_1+1}$ may be key switched with a key switching key going from the secret key ($s_{n_1+1}^{(2)}, \cdots, s_{n_2}^{(2)}$) to $\vec{s}^{(1)}$, 311. The result may be added to ct'' to obtain the result.

In this example, the key switching key may be smaller, e.g., proportional to $n_2 - n_1$ instead of $n_2$; the computation may be faster, e.g., corresponding to a regular key switching of a ciphertext of size $n_2 - n_1 + 1$ instead of $n_2 + 1$; and the noise in the output may be smaller, e.g., because the algorithm involves a smaller linear combination.

In the same way as described above, also a packing key switching, e.g., going from one or more value ciphertexts to a polynomial ciphertext, can be improved. In this case, the key switching may be applied to one or more values encrypted under the key switching input key to obtain an encrypted key switching output polynomial based on the one or more values. Similarly, the above techniques can be applied when the key switching input and output keys have digits in common but one is not a subset of the other. Also in this case, key switching operations for common digits can be avoided as discussed above, leading to smaller key switching keys; more efficiency; and less noise.

Combining the examples of **Fig. 2** and **Fig. 3**, it is also possible for a secret key to both comprise digits with predefined values, and digits that are in common with another secret key. This combination is referred to as a shared randomness partial secret key. In particular, shared randomness partial secret keys may be defined as a list of partial secret keys as described with respect to Fig. 2 with public knowledge about shared coefficients as described with respect to Fig. 3. Such keys can be defined by a structure **SRSK** as discussed with respect to Fig. 3, where the secret keys are partial secret keys as defined with respect to Fig. 2.

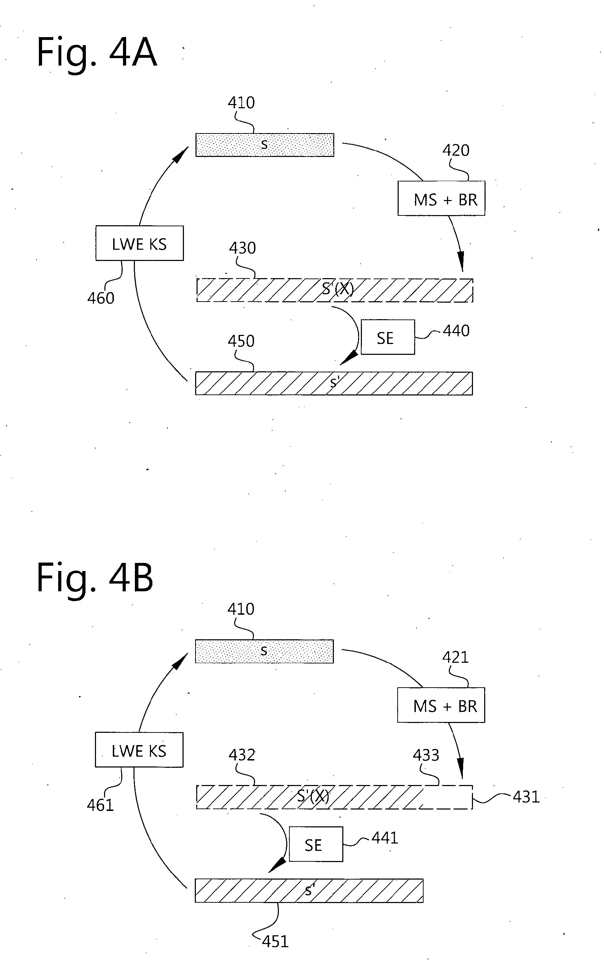

**Fig. 4a** shows a detailed, yet non-limiting, example of a programmable bootstrapping (PBS). This example illustrates a PBS in the LWE setting as known in the art.

The known PBS is composed of 3 operations: MS (modulus switch), BR (blind rotation) and SE (sample extract). The figure illustrates a ciphertext 410 encrypted under a blind rotation input LWE key $\vec{s}$, which goes into a MS+BR step 420 outputting a RLWE ciphertext 430 encrypted under the blind rotation output RLWE key $S'(X) = \sum_{i=0}^{N-1} s'_i X^i$. Then there is a SE 440 outputting an LWE ciphertext 450 encrypted under a LWE secret key $\vec{s}' = (s_0, \cdots, s_{N-1}')$, and finally an LWE key switch 460 is performed to go back to the original blind rotation input LWE key $\vec{s}$.

In this case, the programmable bootstrapping is combined with the key switch 460 that is used to go back to the original LWE secret key $\vec{s}$. It is noted that this is not needed in general. Moreover, although this figure uses RLWE ciphertext as an illustration, it is also possible to use another type of GLWE ciphertext.

**Fig. 4b** shows a detailed, yet non-limiting, example of a programmable bootstrapping. This programmable bootstrapping is based on the example of Fig. 4a, but uses a sample extraction input key that has one or more digits with predefined values.

In more detail, a modulus switching and blind rotation 421 may be applied to an input value 410 encrypted under a blind rotation input key 421 to obtain a rotation polynomial encrypted under a blind rotation output key 431. The rotation polynomial may represent an application of a lookup table to the input value. A sample extraction 441 may be applied to the encrypted rotation polynomial to obtain an encrypted coefficient of the polynomial, representing an output of the lookup table, with the sample extraction input key 431 in this example being the same as the blind rotation output key. Further, a key switching 461 may be applied to the encrypted coefficient to obtain a key switching output. In this example, the key switching goes back to the key 410 under which the input value was encrypted. Accordingly, an encryption may be obtained of the result of applying the lookup table to the input value, where the resulting encryption has an amount of noise independent of the noise of the input value.

As illustrated, in this case, the output key 431 of the blind rotation, which is equal to the input key of the sample extraction, is a partial secret key. Namely, it includes digits 432 that do not have predefined values and digits 433 that do have predefined values.

As a consequence of using this partial secret key, the LWE ciphertext output by the sample extraction 441 may be smaller than in Fig. 4a, because it is encrypted under a smaller LWE key $\vec{s}' = (s_0,, \cdots, s_{n'-1}')$, 451 corresponding to the partial RLWE secret key $S'(X) = \sum_{i=0}^{n'-1} s_i' X^i$, with $n' < N$. As a consequence, also the key switching 461 may be less costly in terms of computation, noise growth, as well as storage requirements for the key switching key. Moreover, also the noise growth during the blind rotation 421 is smaller because the secret key polynomial contains zeros.

The illustrated example can be generalized in several ways. In general, one or more operations (e.g., linear homomorphic operations) can be applied to ciphertext the before applying the sample extraction 441, and/or to the ciphertext before applying the key switching 461. As in Fig. 4a, it is also possible to omit or delay key switching 461.

It is also possible to use predefined values other than zero. For example, the predefined values can all be zero or all be one, or zeros and ones can be combined, e.g., the predefined values can be a hash of a certain preimage. Generally, it is possible to efficiently convert ciphertexts between secret keys that differ only in the predefined values, e.g., a ciphertext ct = $(a_1, a_2, a_3, a_4, b)$ under a partial secret key $\vec{s} = (\beta_1, \beta_2, 1,1)$ may be transformed into a ciphertext encrypting the same message under a partial secret key $\vec{s}' = (\beta_1, \beta_2, 0,0)$ by computing ct' = $(a_1, a_2, a_3, a_4, b - a_3 - a_4)$.

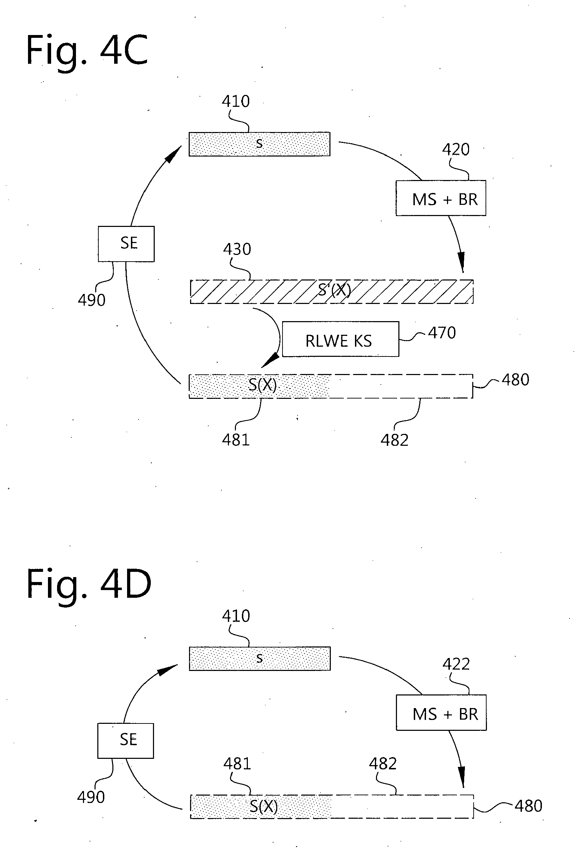

**Fig. 4c** shows a detailed, yet non-limiting, example of a programmable bootstrapping. Also this example is based on the example of Fig. 4a. Similarly to Fig. 4b, it involves applying a sample extraction using a sample extraction input key that has one or more digits with predefined values.

In this example, the order of the key switching and the sample extraction are reversed compared to Figs. 4a and 4b. Namely, the key switching is performed before the sample extraction, instead of after.

In particular, in this figure, a modulus switching and a blind rotation 420 are applied to an input encryption encrypted under an input key 410, resulting in an encrypted rotation polynomial. The rotation polynomial can be encrypted under a secret key 430 that is unrelated to the input key. A key switching 470 (in this example, a RLWE key switching) is applied based on the encrypted rotation polynomial to obtain a key switching output, which is encrypted under a key switching output key 480.

Interestingly, the key switching output key 480 may be selected such that a subsequent sample extraction 490 leads to an encryption under a desired key. To this end, as illustrated, the key switching output key 480, which is the same in this example as the sample extraction input key, may comprise one or more digits 482 with predefined values, and may further comprise the digits 481 of the desired key. This way, sample extraction 490 may indeed give the desired output, see Fig. 4b.

For example, as also illustrated in the figure, the desired key can be the same key 410 under which the input is encrypted, namely, the blind rotation input key of blind rotation 420. This way, it is possible to continue performing the encrypted computation under this key after the blind rotation. However, it is also possible to switch to a different LWE key as desired.

By using a sample extraction 490 with shared randomness partial secret keys in this way, a faster programmable bootstrapping with key switching is obtained. By performing the key switching 470 before the sample extraction, it becomes possible to use a key switch 470 on encrypted polynomials (in this example, a RLWE key switch) instead of a key switch on encrypted values. This is advantageous in particular because the polynomial key switch can exploit the FFT/NTT to speed up the computation, thereby improving efficiency. Also the size of the key material can be reduced compared to the value key switch.

As with Fig. 4b, it is generally possible to perform additional operations, e.g., linear homomorphic operations, before key switching 470 or before sample extraction 490, as desired. It is also possible to perform multiple programmable bootstrappings that use the same blind rotation 420 but a different key switching 470; this way, it is possible to use the proposed programmable bootstrapping to obtain resulting encryptions according to multiple respective output keys.

**Fig. 4d** shows a detailed, yet non-limiting, example of a programmable bootstrapping. Also this example is based on the example of Fig. 4a. As in Fig. 4b and Fig. 4c, a sample extraction 490 is used where the sample extraction input key has one or more digits with predefined values.

As shown in the example, a modulus switching and blind rotation 422 may be performed on an input ciphertext. In this example, interestingly, the blind rotation is performed in such a way that the blind rotation output key 480, which is also the sample extraction input key, is composed of one or more digits 482 with predefined values, and the digits 481 of a desired output key. According, as discussed with respect to Fig. 4c, applying the sample extraction 490 may lead to an encryption under the desired output key. For example, as illustrated, the desired output key can be the same key 410 under which the input ciphertext is encrypted (namely, the blind rotation input key), or any other desired key.

In other words, a partial secret key may be used that that shares randomness with the input secret key so that modulus switching and blind rotation 422 and sample extraction 490 directly have the same secret key as input and output. Interestingly, in this example, there is no need to compute a key switch to go back to the input secret key, making this programmable bootstrapping particularly efficient and also eliminating the need for a key switching key in this example.

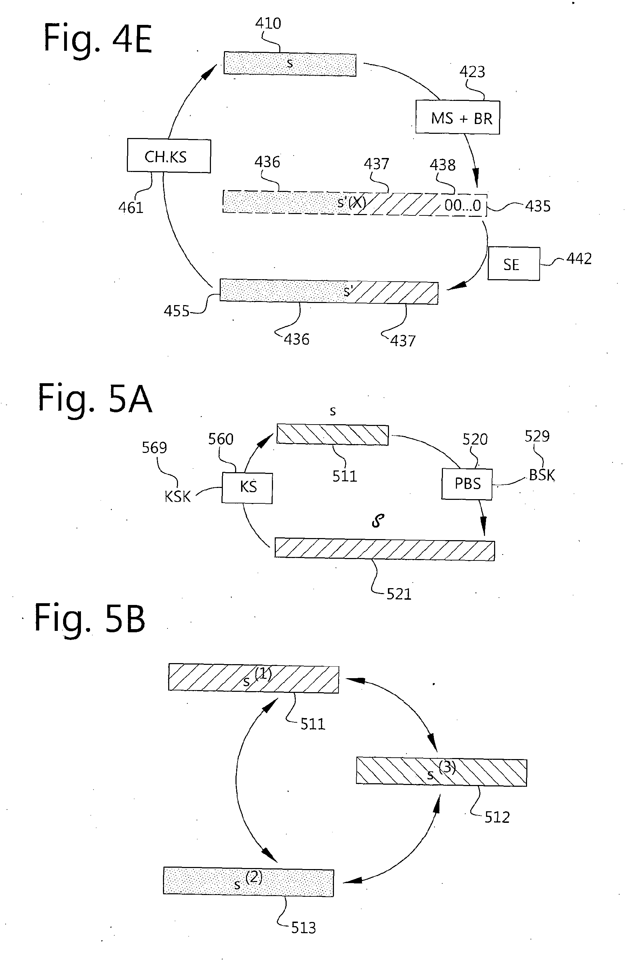

**Fig. 4e** shows a detailed, yet non-limiting, example of a programmable bootstrapping.

This example is similar to the example of Fig. 4d, in that a modulus switching and blind rotation 423 are used, where the blind rotation has an output key 435 comprising the digits 436 of a desired output key, as well as digits 438 with predefined values. Also in this example, a sample extraction 442 is used, where the sample extraction input key is equal to the blind rotation output key 435. For example, the sample extraction may be applied directly to the output of the blind rotation, or there may be one or more operations in between.

However, the blind rotation input key in this case comprises not just the digits 436 of the desired output key and the digits 438 with the predefined values, but one or more additional digits 437 as well. Accordingly, also the output the sample extraction 442, may be encrypted under a key 455 comprising the digits 436 of the desired output key, as well as the additional digits 437.

Accordingly, a key switching 461 may be used to convert the output of the sample extraction, to an encryption under the desired output key 436. This output key can, as illustrated in the figure, be the same as the blind rotation input key 410 under which the input encryption is encrypted, but this is not necessary. Interestingly, the key switching in Fig. 4e is from an input key whose set of digits 436,437 comprises the digits 436 of the output key. Accordingly, the key switching 461 can be implemented efficiently as a chunked key switching, see Fig. 3.

More generally, it also advantageous if the output key 455 of the sample extraction has one or more digits in common with the desired output key, since, as described herein, this allows to implement the key switching 461 more efficiently than a general key switching as performed e.g., in Fig. 4a.

In particular, a polynomial partial secret key 435 may be used that that shares randomness with the input secret key 410 plus additional randomness 437 and digits 438 with known values. Thereby, efficiency of the key switch 461 is improved.

**Fig. 5a** shows a detailed, yet non-limiting, example conversions between keys. Generally, an encrypted computation, or a part of it, may be performed based on a value key $s$, 511, e.g., a LWE key, and an associated polynomial key $S$, 521, e.g., a GLWE key. The key material associated to this part of the encrypted computation may be referred to herein as a key set.

As illustrated in the figure, such a part of the encrypted computation may comprise one or more programmable bootstrappings 520 going from the value key 511 to the polynomial key 521. For example, the programmable bootstrapping may comprise a modulus switching, a blind rotation, and a sample extraction, as in Fig. 4a. The programmable bootstrappings, e.g., their blind rotation, may use bootstrapping key 529.

Further, the part of the encrypted computation may comprise one or more key switchings 560 going from the polynomial key 521 to the value key 511. The key switchings may use key switching key 569.

The part of the computation may comprise further operations on ciphertexts encrypted under keys 511, 521, e.g., linear operations such as additions between ciphertexts, or multiplications between a ciphertext and a known integer.

Accordingly, the key set associated to this part of the encrypted computation may comprise the value key 511; the polynomial key 521; the bootstrapping key 529; and the key switching key 569. It is noted that the party carrying out the encrypted computation only uses the bootstrapping key 529 and the key switching key 569, and typically does not have access to the value key 511 and the polynomial key 521.

In particular, a key set may be defined as a set composed of a value secret key $\vec{s} \in \mathbb{Z}_q^n$, 511; a polynomial secret key $\vec{S} \in \mathfrak{R}_q^k$, 521 which, for the purpose of key switching 560, can also interpreted as a value secret key

$$\mathcal{S} \in \mathbb{Z}_q^{k \cdot N};$$

a bootstrapping key BSK, 529 going from the value secret key $\vec{s}$ 511 to the polynomial secret key $\mathcal{S}$, 521; and a key switching key KSK, 569 going from the polynomial secret key $\mathcal{S}$, 521 (interpreted as a value key) to the value secret key $\vec{s}$, 511.

It is noted that polynomial key $\vec{S}$ and its interpretation $\mathcal{S}$ as a value key are considered to be the same key, and not as separate keys of the key set.

Typically, the polynomial key 521 has a larger number of digits than the value key 511, e.g., by a factor at least two, at least four, or at least eight. Therefore the polynomial key 521 is sometimes referred to as the "big key" of the key set and the value key 511 is sometimes referred to as the "small key" of the key set.

By using a key set as illustrated, an encrypted computation may be performed that has an arbitrary number of operations, e.g., there is no limitation on the number of operations (e.g., additions or multiplications) that can be applied.

Generally, the overall key set of the homomorphic encryption may comprise multiple key sets as described with respect to this figure, e.g., multiple value keys and associated polynomial keys. Interestingly, by using, in this overall key set, keys 511, 521 that have digits in common and/or digits with predefined values, it is possible to have a smaller amount of public material, e.g., for key switching key 569 and/or bootstrapping key 529, and improved computational efficiency. Various examples are given herein.

**Fig. 5b** shows a detailed, yet non-limiting, example of conversions between keys.

As also discussed with respect to Fig. 5a, generally, the overall key set used in an encrypted multiplication may comprise multiple key sets as defined with respect to Fig. 5a. In particular, the overall key set may comprise multiple value keys, e.g., LWE keys; and associated polynomial keys, e.g., GLWE keys. By using different keys, typically with different parameters (e.g. $N,k$), for different parts of the encrypted computation, the encrypted computation may be able to deal efficiently with different precision requirements for the different parts.

For example, an encrypted computation may involve at least two key sets of associated value and polynomial keys; at least three key sets; or at least five key sets. The encrypted computation may comprise one or more operations that go from one key set to another key set. The key material used for these operations, may be referred to as a bridge key set.

For example, the figure illustrates an encrypted computation with three key sets with respective value keys $s^{(1)}$, 511; $s^{(2)}$, 512; and $s^{(3)}$, 513. The six arrows represent key switchings between the value keys. In such a case, the bridge key set may comprise six respective key switching keys for the six respective key switchings. More generally, the key set may comprise key switching keys for performing key switchings from each value key to each other value key.

Interestingly, the provided techniques allow to use smaller bridge key sets and/or more efficient conversions. Various examples are given herein.

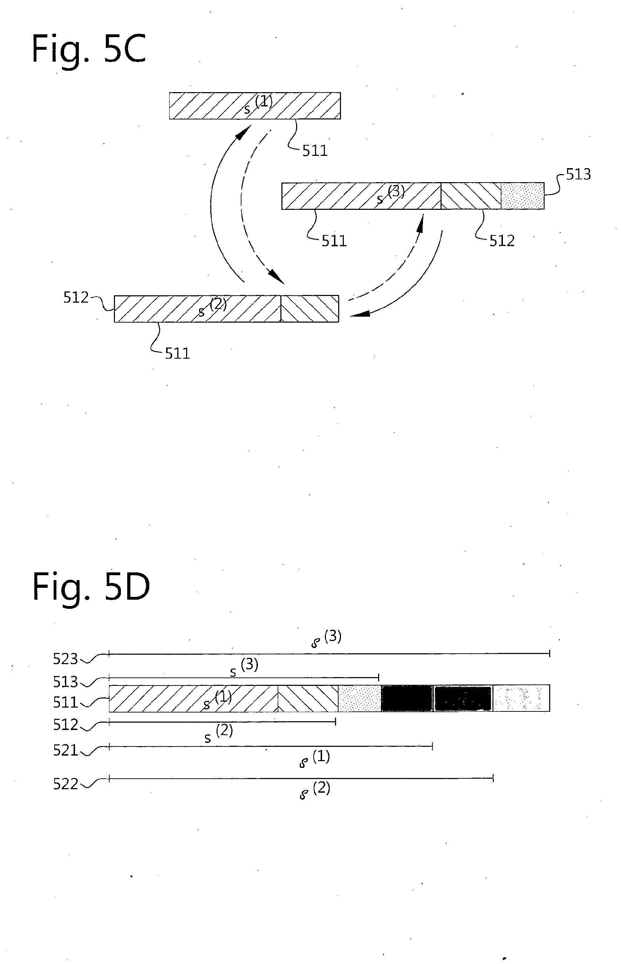

**Fig. 5c** shows a detailed, yet non-limiting, example of conversions between keys.

This example shows how, by using keys that have digits in common, it is possible to have a smaller bridge key set and more efficient conversions between encryptions under respective keys, in particular for LWE/GLWE keys. This example shows key switchings for value keys used in an encrypted computation (so not e.g., a polynomial key as used in a programmable bootstrapping).

Namely, the figure shows key switchings between a first key 511; a second key 512; and a third key 513, where the digits of the first key 511 are a subset of the digits of the second key 512, and the digits of the second key 512 are a subset of the digits of the third key 513. The dotted arrows represent key switchings from a smaller key to a bigger key. The solid arrows represent key switchings from a bigger to a smaller key. The figure shows three keys, but the example can be generalized also to more than three keys, e.g., at least five keys.

In this example, a key switching from a smaller key to a subsequent bigger key (e.g., from key 511 to key 512 or key 512 to key 513), or a key switching from a bigger key to a subsequent smaller key (e.g., from key 513 to key 512 or key 512 to key 511) may be performed efficiently due to the overlapping sets of digits, as is described in the LWE setting with respect to Fig. 3. A key switching from a key to a non-subsequent other key may be performed by performing respective key switchings between subsequent keys, e.g. from key 511 to key 512 and then from key 512 to key 513; or from key 513 to key 512 and then from key 512 to key 511.

In particular, for LWE-type keys, converting data from key set (1), 511 to any of the other two key sets 512, 513, may be performed by padding the ciphertext with zeros. Converting data from key set (2), 512 to key set (1), 511, may comprise computing a smaller key switch only for the part of the ciphertext not corresponding to key 511. Such a type of key switch is also referred to herein as a chunked key switching. In the same way, converting data from key set (3), 513 to key set (1), 511, may be performed by first converting to key set (2), 512 with a key switch for the part of key 513 not in included in key 512, and then converting to key set (1), 511 as described above.

Accordingly, the bridge key set in this case may be formed just by key switching keys from subsequent bigger to smaller keys, e.g. from key 513 to key 512 and from key 512 to key 511. In other words, using shared randomness secret keys 511-513 may enable to factorize several key switching keys, so that a smaller total amount of data is needed for the key switching keys. It can also produce less noise, and enable more efficient procedures to key switch ciphertexts, as described.

**Fig. 5d** shows a detailed, yet non-limiting, example of conversions between keys.

In this example, as in Fig. 5c, three value keys 511, 512, 513 (e.g., LWE keys) are shown, where the digits of value key 511 are a subset of the digits of value key 512, and the digits of value key 512 are a subset of the digits of value key 513.

As discussed with respect to Fig. 5a, typically, an encrypted computation typically involves polynomial keys, e.g., GLWE keys, corresponding to the respective value keys. In particular, the encrypted computation may involve first, second, and third polynomial keys corresponding to the first, second, and third value keys.

Interestingly, in this example, also the polynomial keys are shared randomness keys. In particular, the digits of the third value key 513 are a subset of the first polynomial key 521; the digits of the first polynomial key 521 are a subset of the digits of the second polynomial key 522; and the digits of the second polynomial key 522 are a subset of the digits of the third polynomial key 523. As in Fig. 5c, this example can be generalized to a different number of value/polynomial key sets than three, for example, to at least five such key sets.

This setup is beneficial because it offers an efficient way to transfer data across key sets, using little key material.

In particular, as discussed with respect to Fig. 5a, an encrypted computation may comprise key switchings from the polynomial key of a key set to the corresponding value key, e.g., from key 521 to key 511; from key 522 to key 512; and/or from key 523 to key 513. In this example, these key switchings go from one key to another key that has this key as a subset, and can thus be implemented efficiently as discussed for the LWE setting with respect to Fig. 3. Moreover, by implementing these key switchings as key switchings between subsequent keys 511, 512, 513, 521, 522, 523 (e.g., key switching from key 521 to key 513; from key 513 to key 512; and then from key 512 to key 511), the overall amount of key material for the key switching keys can be greatly reduced.

In particular, in this example, the key switching keys, both from the key sets and from the bridge key sets, may be factorized into a list of chunked key switching keys, because the value and polynomial keys 511-523 form a sequence of keys whose digits are subsets of each other. For example, in this example, the key switching keys used by the encrypted computation, may be stored by storing the following keys:

- the chunked key switching key from

$$\mathcal{S}^{(3)},$$

523 to

$$\mathcal{S}^{(2)},$$

522;
- the chunked key switching key from

$$\mathcal{S}^{(2)},$$

522 to

$$\mathcal{S}^{(1)},$$

521;
- the chunked key switching key from

$$\mathcal{S}^{(1)},$$

521 to $\vec{s}^{(3)}$, 513;
- the chunked key switching key from $\vec{s}^{(3)}$, 513 to $\vec{s}^{(2)}$, 512;
- the chunked key switching key from $\vec{s}^{(2)}$, 512 to $\vec{s}^{(1)}$, 511.

This key material can be much smaller than, for example, separately storing key switching keys from

$$\mathcal{S}^{(3)}$$

to $\vec{s}^{(3)}$; from

$$\mathcal{S}^{(2)}$$

to $\vec{s}^{(2)}$; and from

$$\mathcal{S}^{(1)}$$

to $\vec{s}^{(1)}$, without the use of shared randomness secret keys.

A further advantage of using value and polynomial keys with shared randomness, is that it allows smaller bootstrapping keys. In particular, a first blind rotation may be applied with a first blind rotation input key 511 and output key 521, and a second blind rotation may be applied with a second blind rotation input key 512 and the same blind rotation output key 521. If the blind rotation input keys 511, 512 have digits in common, e.g., the digits of key 511 are a subset of the digits of key 512 as in this example, then the blind rotation keys may be stored more efficiently because they contain common encryptions. Similarly, blind rotation keys going from keys 511-513 to key 522 and from keys 511-513 to key 523 may be stored more efficiently using common encryptions.

Accordingly, by using shared randomness secret keys, several bootstrapping keys may be factorized together. In particular, the bootstrapping key may comprise multiple gadget ciphertexts encrypting respective secret key digits of the blind rotation input key 511-513. If one input key 511 is included in the other key 512, then the bootstrapping key for the larger input key 512 may incorporate the bootstrapping key for smaller input key 511. The gadget encryptions may use the same polynomial size and the same base, or one base dividing the other.

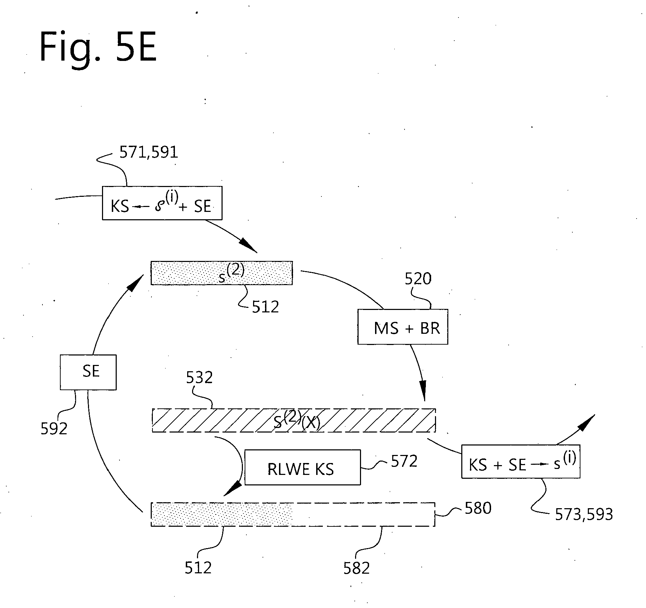

**Fig. 5e** shows a detailed, yet non-limiting, example of conversions between keys.

This example is based on the example of Fig. 4c. Namely, a programmable bootstrapping from a value key 512, e.g., a LWE key, to the same key may be implemented by performing a modulus switching and blind rotation 520, resulting in an encryption under a polynomial key 532, e.g., a GLWE key; performing a key switching 572 (in this example: a RLWE key switching; but this is not needed), resulting in an encrypted polynomial under a key 580 which comprises the digits of the key 512 and digits 582 with predefined values; and applying a sample extraction 592 according to the key 580.

This example shows how such a programmable bootstrapping can be used in an encrypted computation that uses multiple different key sets of associated value and polynomial keys. Namely, as the figure illustrates, it is possible to efficiently perform a programmable bootstrapping that has a value encryption under one key as input and a value encryption under a different key as output. To this end, instead of performing a key switching 572 to a key that comprises the digits 512 of the value input key, a key switching 571, 573 may be performed to a key that comprises the digits of another desired value key. A corresponding sample extraction 591, 593 may then be applied to obtain an encrypted value under the desired key.

In particular, in this setup, the value keys 512 and the polynomial keys 532 may be independent from each other. Key switchings 571-573 may be polynomial key switchings resulting in partial and shared randomness keys 572 enabling subsequent sample extraction 591-593. This leads to a different bridge key set than in Fig. 5d. Interestingly, key switchings 571; 572, 573 may be polynomial key switchings, in particular RLWE key switchings, and may thus have small key switching keys (e.g., a RLWE key switching key may comprise just a number of RLWE ciphertexts equal to the level) and may allow an efficient implementation using FFTs.

To convert between value encryptions under different keys, it is possible to define the value keys 512 such that their digits are subsets of each other, as discussed with respect to Fig. 5c. As explained, this enables efficient conversion, especially in the LWE setting. This is not needed in this example however, e.g., because conversions between value encryptions may be performed via programmable bootstrapping as described herein.

Similarly to Fig. 5d, by having respective input keys to the blind rotation 520 that are subsets of each other and having the same output keys, also the blind rotation keys may be factorized, further reducing the size of the key material.

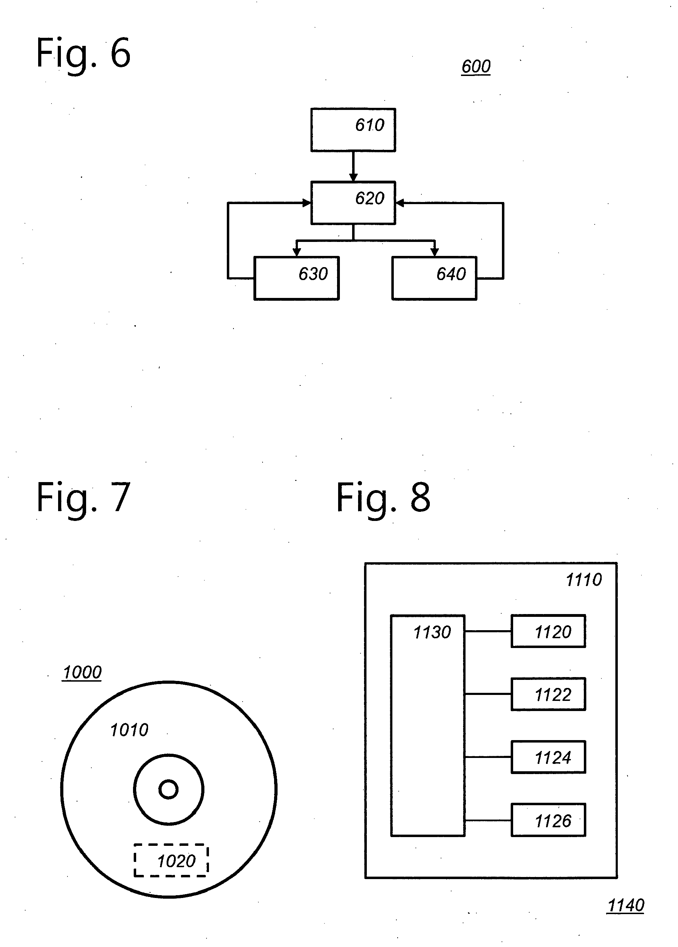

**Fig. 6** schematically shows an example of an embodiment of a cryptographic method 600 of performing an encrypted computation. Method 600 may be computed-implemented.

The method 600 may comprise storing 610 values and polynomials encrypted under one or more encryption keys. The keys may form a key set. A first key and a second key of the key set may have one or more digits in common. Instead or in addition, at least one key of the key set may have one or more digits with predefined values.

The method 600 may comprise applying 620 a blind rotation to an input value encrypted under a blind rotation input key of the key set to obtain a rotation polynomial encrypted under a blind rotation output key of the key set.

The method 600 may comprise applying 630 a sample extraction to a polynomial encrypted under a sample extraction input key of the key set to obtain an encrypted coefficient of the polynomial. Instead or in addition, the method 600 may comprise, applying 640 a key switching to a value or polynomial encrypted under a key switching input key of the key set to obtain a key switching output encrypted under a key switching output key of the key set.

Many different ways of executing the method(s) 600 are possible, as will be apparent to a person skilled in the art. For example, the order of the steps can be performed in the shown order, but the order of the steps can be varied or some steps may be executed in parallel. Moreover, in between steps other method steps may be inserted. The inserted steps.may represent refinements of the method such as described herein, or may be unrelated to the method. For example, some steps may be executed, at least partially, in parallel. Moreover, a given step may not have finished completely before a next step is started.

Embodiments of the methods may be executed using software, which comprises instructions for causing a processor system to perform method 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Typically, the devices described herein, e.g., in Fig. 1a-1b, comprise one or more microprocessors which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, the systems may comprise circuits for the evaluation of cryptographic primitives.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

**Fig. 7** shows a computer readable medium 1000 having a writable part 1010. Computer readable medium 1000 is shown in the form of an optically readable medium. Computer readable medium 1000 may store data 1020 wherein the data may indicate instructions, which when executed by a processor system, cause a processor system to perform an embodiment of a method of performing an encrypted computation according to an embodiment.

Instead or in addition, the data 1020 may represent one or more key switching and/or bootstrapping keys for performing an encrypted computation on values and polynomials encrypted under one or more encryption keys, as described herein. The keys may form a key set. A first key and a second key of the key set have one or more digits in common, and/or at least one key of the key set may have one or more digits with predefined values.

The data 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable.

**Fig. 8** shows in a schematic representation of a processor system 1140 according to an embodiment of a device for performing an encrypted computation. The processor system comprises one or more integrated circuits 1110. The architecture of the one or more integrated circuits 1110 is schematically shown in the figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the device for performing the encrypted computation, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While device 1110 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1110 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

**1.** A cryptographic method (600) of performing an encrypted computation, comprising:

- storing (610) values and polynomials encrypted under one or more encryption keys forming a key set;
- applying (620) a blind rotation to an input value encrypted under a blind rotation input key of the key set to obtain a rotation.polynomial encrypted under a blind rotation output key of the key set; and
- applying (630) a sample extraction to a polynomial encrypted under a sample extraction input key of the key set to obtain an encrypted coefficient of the polynomial, and/or applying (640) a key switching to a value or polynomial encrypted under a key switching input key of the key set to obtain a key switching output encrypted under a key switching output key of the key set;

wherein a first key and a second key of the key set have one or more digits in common, and/or at least one key of the key set has one or more digits with predefined values.

2. The method (600) of claim 1, comprising applying the sample extraction based on the encrypted rotation polynomial, wherein the sample extraction input key has one or more digits with predefined values.

3. The method (600) of claim 2, wherein the sample extraction input key is the blind rotation output key.

4. The method (600) of claim 2 or 3, wherein the sample extraction input key further has one or more digits in common with the blind rotation input key.

5. The method (600) of claim 4, wherein the set of digits of the sample extraction input key consists only of the set of digits of the blind rotation input key and the digits with predefined values.

6. The method (600) of claim 2, comprising:

   - applying the blind rotation to obtain the encrypted rotation polynomial;
   - applying the key switching based on the encrypted rotation polynomial to obtain the key switching output encrypted under the key switching output key, and
   - applying the sample extraction based on the key switching output to obtain an encryption under a desired key,

   wherein the key switching output key comprises one or more digits with predefined values and further comprises the digits of the desired key.

7. The method (600) of claim 6, wherein the desired key is the blind rotation input key.

8. The method (600) of claim 6 or 7, further comprising applying a further blind rotation according to the same blind rotation input and output keys; applying a further key switching based on the further blind rotation and according to a further key switching output key; and applying a further sample extraction based on the further key switching, thereby obtaining a further encryption under a further desired key.

9. The method (600) of any preceding claim, comprising applying the key switching wherein the key switching input and output keys have one or more digits in common.

10. The method (600) of claim 9, comprising applying the key switching to one or more values encrypted under the key switching input key to obtain an encrypted key switching output polynomial based on the one or more values.

11. The method (600) of claim 9 or 10, wherein:

   - the digits of the key switching input key are a subset of the digits of the key switching output key, and the key switching comprises setting to zero ciphertext elements of the key switching output corresponding to the digits of the key switching output key not occurring in the key switching input key, and/or
   - the digits of the key switching input key are a superset of the digits of the key switching output key, and the key switching comprises key switching only ciphertext elements of the encrypted value or polynomial corresponding to digits of the key switching input key not occurring in the key switching output key.

12. The method (600) of claim 11, wherein the digits of a first key are a subset of the digits of a second key, and wherein the digits of the second key are a subset of the digits of a third key, wherein the method comprises applying a key switching between the first and second keys, and applying a key switching between the second and third keys.

13. The method (600) of any preceding claim, comprising applying blind rotations with first blind rotation input keys and second blind rotation input keys, respectively, wherein the first and second blind rotation input keys have one or more digits in common.

**14.** A cryptographic device (110) for performing an encrypted computation, comprising:

- a storage (140) for storing values and polynomials encrypted under one or more encryption keys forming a key set;
- a processor subsystem (130) configured to:

  - apply a blind rotation to an input value encrypted under a blind rotation input key of the key set to obtain a rotation polynomial encrypted under a blind rotation output key of the key set; and
  - apply a sample extraction to a polynomial encrypted under a sample extraction input key of the key set to obtain an encrypted coefficient of the polynomial, and/or apply a key switching to a value or polynomial encrypted under a key switching input key of the key set to obtain a key switching output encrypted under a key switching output key of the key set;

wherein a first key and a second key of the key set have one or more digits in common, and/or at least one key of the key set has one or more digits with predefined values.

**15.** A transitory or non-transitory computer-readable storage medium (1000) comprising data (1020) representing:

- instructions which, when executed by a processor system, cause the processor system to perform the method according to any one of claims 1-13; and/or
- one or more key switching and/or bootstrapping keys for performing an encrypted computation on values and polynomials encrypted under one or more encryption keys forming a key set, wherein a first key and a second key of the key set have one or more digits in common, and/or at least one key of the key set has one or more digits with predefined values.

# Fig. 1A

# Fig. 1B

# Fig. 2

200

210

$$S_1 : \begin{array}{|ccccccc|} \hline S_{1,0} & S_{1,1} & S_{1,2} & S_{1,3} & S_{1,4} & \cdots & S_{1,N-1} \\ \hline \end{array}$$

$$S_2 : \begin{array}{|ccc|ccc|} \hline S_{2,0} & \cdots & S_{2,\frac{N}{2}-1} & S_{2,\frac{N}{2}} & \cdots & S_{2,N-1} \\ \hline \end{array}$$

221      222

# Fig. 3

313

$S^{(3)}$

311

$S^{(1)}$

$$\begin{array}{|ccccc|ccc|ccc|} \hline S^{(1)}_{1,0} & S^{(1)}_{2,0} & S^{(1)}_{3,0} & \cdots & S^{(1)}_{k_1,0} & S^{(2)}_{k_1+1,0} & \cdots & S^{(2)}_{k_2,0} & S^{(3)}_{k_2+1,0} & \cdots & S^{(3)}_{k_3,0} \\ \hline \end{array}$$

$S^{(2)}$

312

# Fig. 4A

# Fig. 4B

# Fig. 4C

# Fig. 4D

# Fig. 4E

# Fig. 5A

# Fig. 5B

# Fig. 5C

$s^{(1)}$

─511

┌─513

$s^{(3)}$

─511          ─512

512─    $s^{(2)}$

─511

# Fig. 5D

$\mathcal{E}^{(3)}$

523─    $s^{(3)}$

513─

511─    $s^{(1)}$

512─    $s^{(2)}$

521─

$\mathcal{E}^{(1)}$

522─    $\mathcal{E}^{(2)}$

# Fig. 5E

# Fig. 6

_600_

```
        ┌──────────┐
        │   610    │
        └────┬─────┘
             │
             ▼
   ┌────→┌──────────┐←────┐
   │     │   620    │     │
   │     └────┬─────┘     │
   │     ┌────┴────┐      │
   │     ▼         ▼      │
┌──┴───────┐  ┌──────────┴─┐
│   630    │  │    640     │
└──────────┘  └────────────┘
```

# Fig. 7

# Fig. 8

_1000_

_1010_

_1020_

_1110_

_1130_

_1120_

_1122_

_1124_

_1126_

_1140_

Europäisches
Patentamt

European
Patent Office

Office européen
des brevets

# EUROPEAN SEARCH REPORT

Application Number

EP 22 31 5185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | CHILLOTTI ILARIA ET AL: "TFHE: Fast Fully Homomorphic Encryption Over the Torus", JOURNAL OF CRYPTOLOGY, SPRINGER US, NEW YORK, vol. 33, no. 1, 25 April 2019 (2019-04-25), pages 34-91, XP036987049, ISSN: 0933-2790, DOI: 10.1007/S00145-019-09319-X [retrieved on 2019-04-25] * section 4 * | 1-15 | INV. H04L9/00 H04L9/30 |
| X,D | ILARIA CHILLOTTI ET AL: "Programmable Bootstrapping Enables Efficient Homomorphic Inference of Deep Neural Networks", IACR, INTERNATIONAL ASSOCIATION FOR CRYPTOLOGIC RESEARCH , vol. 20210127:133406 25 January 2021 (2021-01-25), pages 1-18, XP061051918, Retrieved from the Internet: URL:https://eprint.iacr.org/2021/091.pdf [retrieved on 2021-01-25] * section 4 * -/-- | 1-15 | TECHNICAL FIELDS SEARCHED (IPC)  H04L |

The present search report has been drawn up for all claims

| Place of search | Date of completion of the search | Examiner |
|---|---|---|
| Munich | 31 January 2023 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 22 31 5185

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim |
|---|---|---|
| X | ILARIA CHILLOTTI ET AL: "Improved Programmable Bootstrapping with Larger Precision and Efficient Arithmetic Circuits for TFHE", IACR, INTERNATIONAL ASSOCIATION FOR CRYPTOLOGIC RESEARCH , vol. 20210602:115148 31 May 2021 (2021-05-31), pages 1-38, XP061059552, Retrieved from the Internet: URL:https://eprint.iacr.org/2021/729.pdf [retrieved on 2021-05-31] * sections 2 and 3 * ----- | 1-15 |

CLASSIFICATION OF THE APPLICATION (IPC)

TECHNICAL FIELDS SEARCHED (IPC)

The present search report has been drawn up for all claims

| Place of search | Date of completion of the search | Examiner |
|---|---|---|
| Munich | 31 January 2023 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Programmable bootstrapping enables efficient homomorphic inference of deep neural networks. **I. CHILLOTTI et al.** Cyber Security Cryptography and Machine Learning (CSCML 2021). Springer, 2021, vol. 12716, 1-19
- Homomorphic encryption: From private-key to public-key. **R. ROTHBLUM.** Theory of Cryptography (TCC 2011). Springer, 2011, vol. 6597, 219-234
- **I. CHILLOTTI et al.** TFHE: fast fully homomorphic encryption over the torus. *J. Cryptol.,* 2020, vol. 33 (1), 34-91
- **L. DUCAS et al.** FHEW: bootstrapping homomorphic encryption in less than a second. *proceedings EUROCRYPT,* 2015
- **D. MICCIANCIO et al.** *Bootstrapping in FHEW-like Cryptosystems, https://eprint.iacr.org/2020/086*

- **C. BONTE et al.** *FINAL: Faster FHE instantiated with NTRU and LWE, https://ia.cr/2022/074*
- **K. KLUCZNIAK.** *NTRU-$\nu$-um: Secure Fully Homomorphic Encryption from NTRU with Small Modulus, https://ia.cr/2022/089*
- **J. H. CHEON et al.** Homomorphic encryption for arithmetic of approximate numbers. *proceedings ASIACRYPT,* 2017
- **C. BOURA et al.** CHIMERA: Combining Ring-LWE-based Fully Homomorphic Encryption Schemes. *J. Math. Cryptol.,* 2020, vol. 14 (1), 316-338
- **M. ALBRECHT et al.** On the concrete hardness of Learning with Errors. *Journal of Mathematical Cryptology,* 2015, vol. 9 (3), 169-203